(19) Europäisches Patentamt
European Patent Office
Office européen des brevets

(11) EP 3 771 720 B1

(12) **EUROPEAN PATENT SPECIFICATION**

(45) Date of publication and mention of the grant of the patent:
**01.05.2024 Bulletin 2024/18**

(21) Application number: **20188491.3**

(22) Date of filing: **30.07.2020**

(51) International Patent Classification (IPC):
***C08G 18/80*** *(2006.01)* ***C09D 175/04*** *(2006.01)*
***C08G 18/32*** *(2006.01)* ***C08G 18/42*** *(2006.01)*
***C08G 18/73*** *(2006.01)* ***C08G 18/79*** *(2006.01)*

(52) Cooperative Patent Classification (CPC):
**C09D 175/04; C08G 18/3206; C08G 18/4277; C08G 18/735; C08G 18/791; C08G 18/792; C08G 18/8096**

# (54) BLOCKED POLYISOCYANATE COMPOSITION, RESIN COMPOSITION, RESIN FILM AND LAMINATE

BLOCKIERTE POLYISOCYANATZUSAMMENSETZUNG, HARZZUSAMMENSETZUNG, HARZFILM UND LAMINAT

COMPOSITION DE POLYISOCYANATE BLOQUÉE, COMPOSITION DE RÉSINE, FILM DE RÉSINE ET STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2019 JP 2019142742**
**15.05.2020 JP 2020085956**
**15.06.2020 JP 2020103285**

(43) Date of publication of application:
**03.02.2021 Bulletin 2021/05**

(73) Proprietor: **Asahi Kasei Kabushiki Kaisha**
**Tokyo 100-0006 (JP)**

(72) Inventors:
- **HIGASHI, Masatsugu**
  **Tokyo 100-0006 (JP)**
- **TANAKA, Eiko**
  **Tokyo 100-0006 (JP)**
- **YOSHINUMA, Tomoharu**
  **Tokyo 100-0006 (JP)**

(74) Representative: **Strehl Schübel-Hopf & Partner**
**Maximilianstrasse 54**
**80538 München (DE)**

(56) References cited:
**US-A- 5 466 860** **US-A- 5 621 063**
**US-A1- 2015 037 591** **US-A1- 2019 100 615**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 771 720 B1

## Description

TECHNICAL FIELD

The present invention relates to a blocked polyisocyanate composition, a resin composition, a resin film and a laminate.

BACKGROUND ART

Conventionally, polyurethane resin coating materials have very good abrasion resistance, chemical resistance and stain resistance. In particular, polyurethane resin coating materials using a polyisocyanate obtained from an aliphatic diisocyanate or an alicyclic diisocyanate further have excellent weather resistance, and the demand therefor has tended to increase. However, since such polyurethane resin coatings are generally in the form of a two-pack type, it is extremely inconvenient to use them. That is, a normal polyurethane resin coating is composed of two components, namely a polyol and a polyisocyanate, and it is necessary to store the polyol and the polyisocyanate separately and mix them at the time of coating. Further, there is a problem in that once the two components are mixed, the coating material forms a gel in a short period of time and cannot be used. Since the polyurethane resin coating has such a problem, it is extremely difficult to use it in an automated coating system in the field of performing line coating, such as an automobile coating or a weak electric coating. In addition, since isocyanate reacts easily with water, it cannot be used in water-based coating materials such as electrodeposition coating materials. Furthermore, when a coating material containing an isocyanate is used, it is necessary to sufficiently wash the coating machine and the coating tank at the end of the work, and therefore, the work efficiency is significantly reduced.

In order to solve the above problems, it has been conventionally proposed to use a blocked polyisocyanate in which all active isocyanate groups are blocked with a blocking agent. This blocked polyisocyanate does not react with the polyol at room temperature. However, since the blocking agent is released from the isocyanate groups upon heating to generate active isocyanate groups and cause a crosslinking reaction between the active isocyanate groups and the polyol, the above-mentioned problems can be improved. Therefore, many blocking agents have been studied and, for example, phenol, methylethylketoxime or the like can be mentioned as typical blocking agents.

However, when a blocked polyisocyanate using these blocking agents is used, a high baking temperature of 140°C or higher is generally required. Baking at a high temperature is not only disadvantageous in terms of energy consumption, but also a factor limiting its use because heat resistance of the substrate is required.

On the other hand, as a low-temperature baking type-blocked polyisocyanate, blocked polyisocyanates using active methylene-based compounds such as acetoacetic acid esters, malonic acid diesters or the like have been studied. For example, Patent Documents 1 and 2 propose a blocked polyisocyanate composition that cures at 90°C

PRIOR ART LITERATURE

Patent Documents

Patent document 1: Japanese Unexamined Patent Application, First Publication No. 2002-322238
Patent document 2: Japanese Unexamined Patent Application, First Publication No. 2006-335954

EP 0 744 423 A1 discloses a polyisocyanate composition in which polyisocyanates are partially or completely blocked with malonic acid ester. US 5,466,860 A, US 2015/037591 A1 and US 2019/100615 A1 disclose polyisocyanate compositions comprising poylisocyanates blocked with dialkyl malonic acid esters.

DISCLOSURE OF INVENTION

Problems to be Solved by the Invention

However, in recent years, there has been a strong demand for adaptation to plastics having low heat resistance from the viewpoint of global environmental protection, and a blocked polyisocyanate composition that cures at a temperature lower than 90°C has been highly desired. Under such circumstances, a water-based polyol having a hydroxyl group (water-dispersed polyols) that has good dispersibility when mixed, has no gelation or excessive thickening during storage, and has good curability at 80°C or lower is not yet known.

The present invention has been made in view of the above circumstances, and provides a blocked polyisocyanate composition having good storage stability when using it for a resin composition and having good curability at a low temperature of about 80°C when forming it into a resin film, and a resin composition and resin film using the blocked polyisocyanate composition.

Means for Solving the Problems

That is, the present invention includes the following aspects.

The first aspect of the present invention is a blocked polyisocyanate composition which contains a blocked polyisocyanate derived from a polyisocyanate and one or more blocking agents, containing a constitutional unit represented by the following general formula (I) and a constitutional unit represented by the following general formula (II), wherein a molar ratio of the constitutional unit represented by the following general formula (II) to the constitutional unit represented by the following general formula (I) is more than 5/95 and less than 95/5,

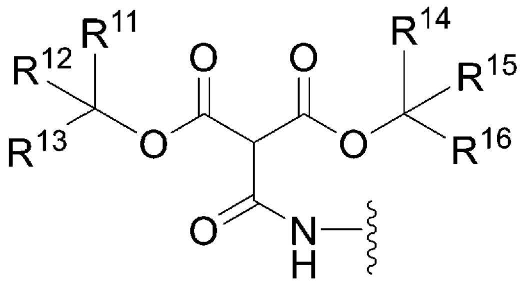

(I)

(in the general formula (I), $R^{11}$, $R^{12}$ and $R^{13}$ are each independently an alkyl group optionally substituted by one or more substituents selected from the group consisting of a hydroxyl group and an amino group, $R^{14}$, $R^{15}$ and $R^{16}$ are each independently a hydrogen atom or an alkyl group optionally substituted by one or more substituents selected from the group consisting of a hydroxyl group and an amino group, the wavy line represents a bonding site),

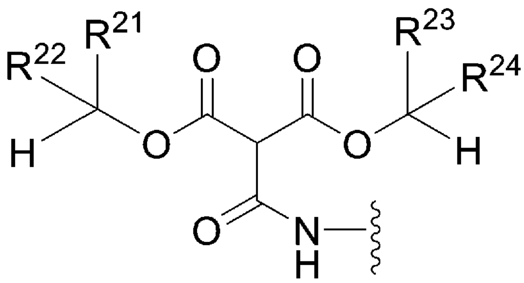

(II)

(in the general formula (II), $R^{21}$, $R^{22}$, $R^{23}$ and $R^{24}$ are each independently a hydrogen atom or an alkyl group optionally substituted by one or more substituents selected from the group consisting of a hydroxyl group and an amino group, the wavy line represents a bonding site),

wherein the polyisocyanate is a reaction product in which a plurality of monomer compounds having one or more isocyanate groups represented by -NCO are bonded,

wherein the blocking agent for producing the blocked polyisocyanate contains a malonic acid ester having secondary alkyl group or a malonic acid ester having a primary alkyl group, and contains a malonic acid ester having a tertiary alkyl group,

and wherein the content of the malonic acid ester having a secondary alkyl group and the malonic acid ester having a tertiary alkyl group is 50 mol% or more with respect to the total molar amount of all blocking agents used in the production of the blocked polyisocyanate..

In the blocked polyisocyanate composition according to the first aspect, the blocked polyisocyanate derived from a polyisocyanate, a malonic ester having one or more tertiary alkyl groups, and a malonic acid ester having one or more secondary alkyl groups or a malonic acid ester having one or more primary alkyl groups, the constitutional unit represented by the general formula (I) may be a constitutional unit derived from the malonic acid ester having a tertiary alkyl group, and the constitutional unit represented by the general formula (II) may be a constitutional unit derived from the malonic ester having a secondary alkyl group or a constitutional unit derived from the malonic ester having a primary alkyl group.

Preferebly, the blocked polyisocyanate composition contains a blocked polyisocyanate derived from a polyisocyanate, a malonic ester having one or more tertiary alkyl groups, and a malonic ester having one or more secondary alkyl groups.

The malonic acid ester having a tertiary alkyl group may include a di-tert-butyl malonate, and the malonic acid ester having a secondary alkyl group may include a diisopropyl malonate.

The polyisocyanate may have an average number of isocyanate functional groups of 2 or more.

The polyisocyanate may be a polyisocyanate derived from at least one diisocyanate selected from the group consisting of an aliphatic diisocyanate and an alicyclic diisocyanate.

The blocked polyisocyanate composition may have a weight-average molecular weight Mw of $2.0 \times 10^3$ or more.

The blocked polyisocyanate may have an isocyanurate group.

A further aspect of the present invention is a resin composition containing the blocked polyisocyanate composition and a polyhydric hydroxy compound selected from the group consisting of an aliphatic hydrocarbon polyol, a polyether polyol, a polyester polyol, an epoxy resin, a fluorine-containing polyol and an acrylic polyol..

A further aspect is a resin film obtained by curing the resin composition.

In the resin film, a gel fraction may be 82% by mass or more when measuring a resin film having a thickness of 40 μm, which is obtained by heating and curing the resin composition at 80°C for 30 min, followed by storing at 23°C for one week, then immersing in an acetone at 23°C for 24 hours.

In the resin film according to the fourth aspect, a König hardness at 23°C may be 38 times or more when measuring a resin film having a thickness of 40 μm, which is obtained by heating and curing the resin composition on a glass at 80°C for 30 min.

In the resin film, a maximum stress in a tensile test carried out at 23°C and a speed of 20 mm/min may be 5 MPa or more when measuring a resin film having a thickness of 40 μm, a width of 10 mm and a length of 40 mm, which is obtained by heating and curing the resin composition at 80°C for 30 min, and set so that a distance between chucks is 20mm.

The present invention furhter relates to a laminate including two or more resin films having different compositions described above, wherein a thickness of each layer of the laminate is 1 μm or more and 50 μm or less.

Effects of the Invention

According to the blocked polyisocyanate composition of the present invention, a blocked polyisocyanate having good storage stability when used as a resin composition and good curability at a low temperature of about 80°C when formed into a resin film can be provided. The resin composition of the present invention has good storage stability. The resin film of the present invention has good curability at a low temperature of about 80°C.

BEST MODE FOR CARRYING OUT THE INVENTION

Hereinafter, embodiments for carrying out the present invention (hereinafter, referred to as "the present embodiment") will be described in detail. The present invention is not limited to the embodiments described below. The present invention can be appropriately modified and implemented within the scope of the claims.

In the present specification, the term "polyol" means a compound having two or more hydroxyl groups (-OH).

In the present specification, the term "polyisocyanate" means a reaction product in which a plurality of monomer compounds having one or more isocyanate groups (-NCO) are bonded.

In the present specification, the term "constitutional unit" means a structure derived from one molecule of a monomer in a structure constituting a polyisocyanate or a blocked polyisocyanate. For example, the constitutional unit derived from a malonic acid ester indicates a structure derived from one molecule of a malonic acid ester in the blocked polyisocyanate. The constitutional unit may be a unit directly formed by a (co)polymerization reaction of a monomer, or a unit in which a part of the unit is converted into other structures by treating the (co)polymer.

«Blocked polyisocyanate composition»

The polyisocyanate composition of the present embodiment contains a blocked polyisocyanate derived from a polyisocyanate and one or more blocking agents.

The polyisocyanate composition of the present embodiment has a constitutional unit represented by the following general formula (I) (hereinafter, sometimes referred to as "constitutional unit (I)") and a constitutional unit represented by the following general formula (II) (hereinafter sometimes referred to as "constitutional unit (II)"). A molar ratio of the constitutional unit represented by the following general formula (II) to the constitutional unit represented by the following general formula (I) (hereinafter, sometimes abbreviated as "molar ratio of constitutional unit (II)/(I)") is more than 5/95 and less than 95/5:

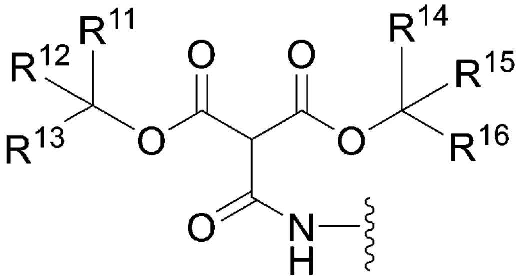

(I)

(In the general formula (I), $R^{11}$, $R^{12}$ and $R^{13}$ are each independently a hydrogen atom or an alkyl group optionally having one or more substituents selected from the group consisting of a hydroxyl group and an amino group. $R^{14}$, $R^{15}$ and $R^{16}$ are each independently a hydrogen atom or an alkyl group optionally having one or more substituents selected from the group consisting of a hydroxyl group and an amino group. The wavy line represents a bonding site.),

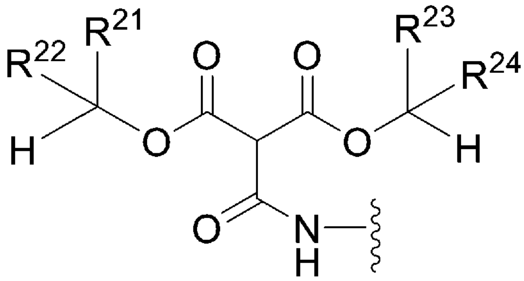

(II)

(In the general formula (II), $R^{21}$, $R^{22}$, $R^{23}$ and $R^{24}$ are each independently a hydrogen atom or an alkyl group optionally having one or more substituents selected from the group consisting of a hydroxyl group and an amino group. The wavy line represents a bonding site.)

In the polyisocyanate composition of the present embodiment, the molar ratio of the constitutional unit (II)/(I) is more than 5/95 and less than 95/5, preferably 7/93 or more and 93/7 or less, more preferably 10/90 or more and 93/7 or less, even more preferably 20/80 or more and 93/7 or less, particularly preferably 30/70 or more and 93/7 or less, and most preferably 35/65 or more and 93/7 or less. When the molar ratio is at least the above lower limit, the storage stability of the obtained resin composition is good, and when it is at most the above upper limit, the low-temperature curability of the obtained resin film is good.

The molar ratio of the constitutional unit (II) to the constitutional unit (I) can be calculated by measuring the composition ratio of the structural unit (II) to the structural unit (I) by $^1$H-NMR and $^{13}$C-NMR after removing the solvent and other components from the blocked polyisocyanate composition at 50°C or less by an evaporator and drying under reduced pressure.

The constitutional unit (I) is preferably derived from a malonic acid ester having a tertiary alkyl group as a blocking agent, and the constitutional unit (II) is preferably derived from a malonic acid ester having a secondary alkyl group or a malonic acid ester having a primary alkyl group as a blocking agent.

That is, the polyisocyanate composition of the present embodiment preferably contains a blocked polyisocyanate derived from a polyisocyanate, a malonic acid ester having one or more tertiary alkyl groups, and a malonic acid ester having one or more secondary alkyl groups or a malonic acid ester having one or more primary alkyl groups. At this time, each of the molar ratio of the constitutional unit derived from a malonic acid ester having a secondary alkyl group to the constitutional unit derived from a malonic acid ester having a tertiary alkyl group, and the molar ratio of the constitutional unit derived from a malonic acid ester having a primary alkyl group to the constitutional unit derived from a malonic acid ester having a tertiary alkyl group is in the same range as the molar ratio of the constitutional unit (II)/(I). When the molar ratio is at least the above lower limit, the storage stability of the obtained resin composition is good, and when it is at most the above upper limit, the low-temperature curability of the obtained resin film is good.

The molar ratio can be calculated, for example, from the molar amounts of the malonic acid ester having a tertiary alkyl group, the malonic acid ester having a secondary alkyl group and the malonic acid ester having a primary alkyl group, which are used as a blocking agent. Alternatively, the molar ratio of the constitutional unit derived from a malonic acid ester having a secondary alkyl group to the constitutional unit derived from a malonic acid ester having a tertiary alkyl group, and the molar ratio of the constitutional unit derived from a malonic acid ester having a primary alkyl group to the constitutional unit derived from a malonic acid ester having a tertiary alkyl group can be calculated, for example, by measuring the composition ratio of the constitutional unit derived from a malonic acid ester having a

secondary alkyl group to the constitutional unit derived from a malonic acid ester having a tertiary alkyl group, and the composition ratio of the constitutional unit derived from a malonic acid ester having a primary alkyl group to the constitutional unit derived from a malonic acid ester having a tertiary alkyl group by $^1$H-NMR and $^{13}$C-NMR after removing the solvent and other components from the blocked polyisocyanate composition at 50°C or less by an evaporator and drying under reduced pressure.

The blocked polyisocyanate composition of the present embodiment more preferably contains a blocked polyisocyanate derived from a polyisocyanate, a malonic acid ester having one or more tertiary alkyl groups, and a malonic acid ester having one or more secondary alkyl groups.

In the blocked polyisocyanate composition of the present embodiment, the molar ratio of the constitutional unit derived from a malonic ester having a secondary alkyl group to the constitutional unit derived from a malonic ester having a tertiary alkyl group (constitutional unit derived from a malonic acid ester having a secondary alkyl group/constitutional unit derived from a malonic acid ester having a tertiary alkyl group) is more than 5/95 and less than 95/5, preferably 7/93 or more and 93/7 or less, more preferably 10/90 or more and 93/7 or less, even more preferably 20/80 or more and 93/7 or less, particularly preferably 30/70 or more and 93/7 or less, and most preferably 35/65 or more and 93/7 or less. When the molar ratio is at least the above lower limit, the storage stability of the obtained resin composition is good, and when it is at most the above upper limit, the low-temperature curability of the obtained resin film is good.

The molar ratio can be calculated, for example, from the molar amounts of the malonic acid ester having a tertiary alkyl group and the malonic acid ester having a secondary alkyl group, which are used as a blocking agent. Alternatively, the molar ratio of the constitutional unit derived from a malonic acid ester having a secondary alkyl group to the constitutional unit derived from a malonic acid ester having a tertiary alkyl group can be calculated, for example, by measuring the composition ratio of the constitutional unit derived from a malonic acid ester having a secondary alkyl group to the constitutional unit derived from a malonic acid ester having a tertiary alkyl group by $^1$H-NMR and $^{13}$C-NMR after removing the solvent and other components from the blocked polyisocyanate composition at 50°C or less by an evaporator and drying under reduced pressure.

It is conventionally known that blocked polyisocyanates blocked with a malonic acid ester having a tertiary alkyl group have excellent curability at a low temperature of about 80°C. However, there is a problem in that the reactivity with a hydroxyl group of polyhydric hydroxy compounds used in the reaction, such as polyols is high and thus a significant increase in viscosity and gelation easily occurs when stored as a resin composition containing a main agent and a curing agent. For this reason, there has not yet been a material that has both curability at a low temperature of about 80°C and storage stability when used as a resin composition. Further, although there is a method to improve the storage stability by adding an alcohol to the resin composition, the addition of a large amount of alcohol may affect the compatibility with the polyol solution and the physical properties of the produced resin film, thereby making it difficult to achieve both low-temperature curability and storage stability, and also in terms of the degree of freedom in design, a composition without or with a small amount of alcohol is desired.

In contrast, the blocked polyisocyanate composition of the present embodiment uses as a blocking agent a malonic acid ester having a tertiary alkyl group in combination with a malonic acid ester having a secondary alkyl group or a malonic acid ester having a primary alkyl group, and has a molar ratio of the constitutional unit derived from the malonic ester having a secondary alkyl group to the constitutional unit derived from the malonic acid ester having a tertiary alkyl group, or a molar ratio of the constitutional unit derived from the malonic ester having a primary alkyl group to the constitutional unit derived from the malonic ester having a tertiary alkyl group within the above range, thereby making it possible to improve the above problems, possible to effectively suppress the viscosity increase and gelation during the storage of a mixed solution of a blocked polyisocyanate composition and a polyhydric hydroxy compound, and possible to exhibit good storage stability. At the same time, a resin film having excellent curability at a low temperature of about 80°C can be obtained.

Hereinafter, each component contained in the blocked polyisocyanate composition of the present embodiment will be described in detail.

<Blocked polyisocyanate>

The blocked polyisocyanate is a reaction product of a polyisocyanate and a blocking agent. That is, in the blocked polyisocyanate, at least a portion of the isocyanate groups in the polyisocyanate are blocked with a blocking agent.

The polyisocyanate composition of the present embodiment contains a constitutional unit represented by the following general formula (I) (constitutional unit (I)) and a constitutional unit represented by the following general formula (II) (constitutional unit (II)). That is, in the polyisocyanate composition of the present embodiment, the blocked polyisocyanate may be a compound containing both the constitutional unit (I) and the constitutional unit (II) in the molecule, or may be a mixture of a blocked polyisocyanate having the constitutional unit (I) and a blocked polyisocyanate having the constitutional unit (II):

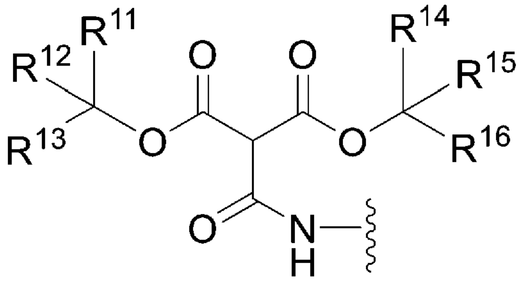

(I)

(In the general formula (I), $R^{11}$, $R^{12}$ and $R^{13}$ are each independently an alkyl group optionally having one or more substituents selected from the group consisting of a hydroxyl group and an amino group, $R^{14}$, $R^{15}$ and $R^{16}$ are each independently a hydrogen atom or an alkyl group optionally having one or more substituents selected from the group consisting of a hydroxyl group and an amino group. The wavy line represents a bonding site.),

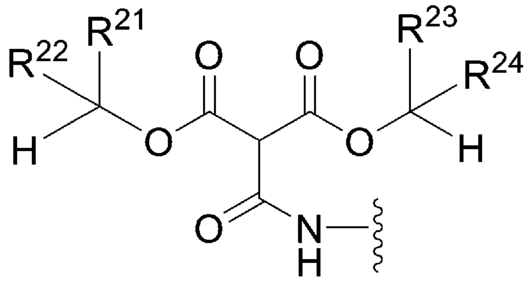

(II)

(In the general formula (II), $R^{21}$, $R^{22}$, $R^{23}$ and $R^{24}$ are each independently a hydrogen atom or an alkyl group optionally having one or more substituents selected from the group consisting of a hydroxyl group and an amino group. The wavy line represents a bonding site.).

[Constitutional unit (I)]

In formula (I), $R^{11}$, $R^{12}$ and $R^{13}$ are each independently an alkyl group optionally having one or more substituents selected from the group consisting of a hydroxyl group and an amino group. $R^{14}$, $R^{15}$ and $R^{16}$ are each independently a hydrogen atom or an alkyl group optionally having one or more substituents selected from the group consisting of a hydroxyl group and an amino group.

The alkyl group for $R^{11}$, $R^{12}$, $R^{13}$, $R^{14}$, $R^{15}$ and $R^{16}$ preferably has a carbon number of 1 to 30, more preferably has a carbon number of 1 to 8, even more preferably has a carbon number of 1 to 6, particularly preferably has a carbon number of 1 to 4. Specific examples of the alkyl group having no substituent include, a methyl group, ethyl group, propyl group, isopropyl group, n-butyl group, tert-butyl group, sec-butyl group, isobutyl group, n-pentyl group, isopentyl group, neopentyl group, tert-pentyl group, 1-methylbutyl group, n-hexyl group, 2-methylpentyl group, 3-methylpentyl group, 2,2-dimethylbutyl group, 2,3-dimethylbutyl group, n -heptyl group, 2-methylhexyl group, 3-methylhexyl group, 2,2-dimethylpentyl group, 2,3-dimethylpentyl group, 2,4-dimethylpentyl group, 3,3-dimethylpentyl group, 3-ethylpentyl group, 2,2,3-trimethylbutyl group, an n-octyl group, isooctyl group, 2-ethylhexyl group, nonyl group, decyl group and the like.

In addition, when $R^{11}$, $R^{12}$, $R^{13}$, $R^{14}$, $R^{15}$ and $R^{16}$ are alkyl groups having a substituent, the substituent is a hydroxyl group or an amino group.

Examples of the alkyl group having a hydroxyl group as a substituent include a hydroxymethyl group, hydroxyethyl group, hydroxypropyl group and the like.

Examples of the alkyl group having an amino group as a substituent include an aminomethyl group, aminoethyl group, aminopropyl group, an aminobutyl group and the like.

Examples of the alkyl group having a hydroxyl group and an amino group as a substituent include a hydroxyaminomethyl group, hydroxy aminoethyl group, hydroxyaminopropyl group and the like.

Among the examples, the alkyl group for $R^{11}$, $R^{12}$, $R^{13}$, $R^{14}$, $R^{15}$ and $R^{16}$ is preferably an alkyl group having 1 to 4 carbon atoms and having no substituent, and more preferably a methyl group, ethyl group or a propyl group, and even more preferably a methyl group from the viewpoint of obtaining a resin film having excellent low-temperature curability.

When all of $R^{11}$, $R^{12}$, $R^{13}$, $R^{14}$, $R^{15}$ and $R^{16}$ are a methyl group, the constitutional unit (I) is a constitutional unit derived from a di-tert-butyl malonate. Among the examples, the constitutional unit (I) is particularly preferably a constitutional unit in which all of $R^{11}$, $R^{12}$, $R^{13}$, $R^{14}$, $R^{15}$ and $R^{16}$ are a methyl group, namely a constitutional unit derived from

a di-tert-butyl malonate.

[Constitutional unit (II)]

In formula (II), $R^{21}$, $R^{22}$, $R^{23}$ and $R^{24}$ are each independently a hydrogen atom or an alkyl group optionally having one or more substituents selected from the group consisting of a hydroxyl group and an amino group.
Examples of the alkyl group optionally having one or more substituents selected from the group consisting of a hydroxyl group and an amino group for $R^{21}$, $R^{22}$, $R^{23}$ and $R^{24}$ are the same as the examples of "$R^{11}$, $R^{12}$, $R^{13}$ and $R^{14}$, $R^{15}$ and $R^{16}$" listed above.
Among the examples, $R^{21}$, $R^{22}$, $R^{23}$, and $R^{24}$ are preferably an alkyl group having 1-4 carbon atoms and having no substituents, more preferably a hydrogen atom, methyl group or an ethyl group from the viewpoint of obtaining a resin composition having excellent storage stability, and even more preferably a methyl group or an ethyl group from the viewpoint of having excellent low-temperature curability.
When all of $R^{21}$, $R^{22}$, $R^{23}$ and $R^{24}$ are a methyl group, the constitutional unit (II) is a constitutional unit derived from a diisopropyl malonate. When either one of $R^{21}$ and $R^{22}$ is a hydrogen atom and the other one is a methyl group, and either one of $R^{23}$ and $R^{24}$ is a hydrogen atom and the other one is a methyl group, the unit (II) is a constitutional unit derived from a diethyl malonate. Among the examples, the constitutional unit (II) is particularly preferably a constitutional unit in which all of $R^{21}$, $R^{22}$, $R^{23}$, and $R^{24}$ are a methyl group, namely, a constitutional unit derived from a diisopropyl malonate.
The blocking agent contains a malonic acid ester having a secondary alkyl group or a malonic acid ester having a primary alkyl group, and a malonic acid ester having a tertiary alkyl group, and more preferably contains a malonic acid ester having a secondary alkyl group and a malonic acid ester having a tertiary alkyl group. The blocked polyisocyanate contained in the blocked polyisocyanate composition of the present embodiment may be a blocked polyisocyanate in which at least a part of the isocyanate groups are blocked with a malonic acid ester having a secondary alkyl group or a malonic acid ester having a primary alkyl group, and with a malonic acid ester having a tertiary alkyl group in the molecule of the blocked polyisocyanate. Alternatively, the blocked polyisocyanate may be a mixture of a blocked polyisocyanate in which at least a part of the polyisocyanate isocyanate groups are blocked with a malonic acid ester having a secondary alkyl group or a blocked polyisocyanate in which least a part of the isocyanate groups are blocked with a malonic acid ester having a primary alkyl group with a blocked polyisocyanate in which at least a part of the isocyanate groups are blocked with a malonic acid ester having a tertiary alkyl group.
The blocked polyisocyanate may have one or more functional groups selected from the group consisting of an allophanate group, uretdione group, iminooxadiazinedione group, isocyanurate group, urethane group and biuret group. Among the functional groups, an isocyanurate group is preferable from the viewpoint of having excellent weather resistance.

[Polyisocyanate]

The polyisocyanate used for producing the blocked polyisocyanate is a reaction product obtained by reacting a plurality of monomer compounds having one or more isocyanate groups (-NCO) (hereinafter, sometimes referred to as "isocyanate monomer").
The isocyanate monomer preferably has 4 to 30 carbon atoms. Specific examples of the isocyanate monomer include the following monomers. These isocyanate monomers may be used alone or in combination of two or more.

(1) Aromatic diisocyanates such as diphenylmethane-4,4'-diisocyanate (MDI), 1,5-naphthalene diisocyanate, tolylene diisocyanate (TDI), xylylene diisocyanate, m-tetramethyl xylylene diisocyanate (TMXDI).
(2) Aliphatic diisocyanates such as 1,4-tetramethylene diisocyanate, 1,6-hexamethylene diisocyanate (hereinafter sometimes referred to as "HDI"), 2,2,4-trimethyl-1,6-diisocyanatohexane, 2,4,4-trimethyl-1,6-hexamethylene diisocyanate, 2-methylpentane-1,5-diisocyanate (MPDI), lysine diisocyanate (hereinafter sometimes referred to as "LDI").
(3) Alicyclic diisocyanates such as isophorone diisocyanate (hereinafter sometimes referred to as "IPDI"), 1,3-bis(diisocyanate methyl) cyclohexane, 4,4'-dicyclohexylmethane diisocyanate, diisocyanate norbornane, di(isocyanatomethyl)norbornane.
(4) Triisocyanates such as 4-isocyanate methyl-1,8-octamethylene diisocyanate (hereinafter sometimes referred to as "NTI"), 1,3,6-hexamethylene triisocyanate (hereinafter sometimes referred to as "HTI"), bis(2-isocyanatoethyl)2-isocyanatoglutarate (hereinafter sometimes referred to as "GTI"), lysine triisocyanate (hereinafter sometimes referred to as "LTI").

Among the examples, the isocyanate monomer is preferably one or more diisocyanates selected from the group consisting of an aliphatic diisocyanate and an alicyclic diisocyanate from the viewpoint of having excellent weather

resistance. Further, the isocyanate monomer is more preferably a HDI or IPDI from the viewpoint of industrial availability. The isocyanate monomer is more preferably a HDI from the viewpoint of lowering the viscosity of the blocked polyisocyanate component.

As the isocyanate monomer used for producing the polyisocyanate, although either an aliphatic diisocyanate or an alicyclic diisocyanate may be used alone, or a combination thereof may be used, it is preferable to use an aliphatic diisocyanate and an alicyclic diisocyanate in combination, particularly preferable to use HDI and IPDI. By using the aliphatic diisocyanate and the alicyclic diisocyanate, it is possible to further improve the toughness and hardness of the obtained coating film.

In the polyisocyanate, from the viewpoint of improving the coating hardness and the strength, the mass ratio of the constitutional unit derived from an aliphatic diisocyanate to the constitutional unit derived from an alicyclic diisocyanate (constitutional unit derived from an aliphatic diisocyanate/ constitutional units derived from an alicyclic diisocyanate) is preferably 50/50 or more and 95/5 or less, more preferably 55/45 or more and 93/7 or less, even more preferably 60/40 or more and 91/9 or less, and still even more preferably 65/35 or more and 90/10 or less.

When the mass ratio of the constitutional unit derived from an aliphatic diisocyanate to the constitutional unit derived from an alicyclic diisocyanate is at least the above lower limit, it is possible to more effectively suppress the decrease in flexibility of the obtained coating film. On the other hand, when it is at most the above upper limit, it is possible to further improve the hardness of the obtained coating film.

The mass ratio of the constitutional unit derived from and aliphatic diisocyanate to the constitutional unit derived from an alicyclic diisocyanate can be calculated, for example, using the following method. First, from the mass of the unreacted diisocyanate after reaction and the concentrations of the aliphatic diisocyanate and the alicyclic diisocyanate in the unreacted diisocyanate obtained by gas chromatographic measurement, the mass of the unreacted aliphatic diisocyanate and the mass of the unreacted alicyclic diisocyanate are calculated. Then, the mass of the unreacted aliphatic diisocyanate and the mass of the unreacted alicyclic diisocyanate calculated above are subtracted from the mass of the charged aliphatic diisocyanate and the mass of the charged alicyclic diisocyanate respectively, and each of the obtained differences is defined as the mass of the constitutional unit derived from an aliphatic diisocyanate and the mass of the constitutional unit derived from an alicyclic diisocyanate. Then, the mass ratio of the constitutional unit derived from an aliphatic diisocyanate to the constitutional unit derived from and alicyclic diisocyanate is obtained by dividing the mass of the constitutional unit derived from an aliphatic diisocyanate by the mass of the constitutional unit derived from an alicyclic diisocyanate.

(Polyol)

The polyisocyanate is preferably derived from the above-mentioned diisocyanate monomer with a polyol having an average number of hydroxyl functional groups of 3.0 or more and 8.0 or less. This makes it possible to increase the average number of isocyanate groups in the resulting polyisocyanate. In the polyisocyanate, the urethane group is formed by the reaction between the hydroxyl group of the polyol B and the isocyanate group of the diisocyanate monomer.

The average number of hydroxyl functional groups in the polyol is preferably 3.0 or more and 8.0 or less, more preferably 3 or more and 6 or less, even more preferably 3 or more and 5 or less, and particularly preferably 3 or 4. In addition, the average number of hydroxyl functional groups in the polyol mentioned here is the number of hydroxyl groups present in one molecule of the polyol.

The number-average molecular weight of the polyol is preferably 100 or more and 1,000 or less, more preferably 100 or more and 900 or less, even more preferably 100 or more and 600 or less, still even more preferably 100 or more and 570 or less, still even more preferably 100 or more and 500 or less, still even more preferably 100 or more and 400 or less, particularly preferably 100 or more and 350 or less, and most preferably 100 or more 250 or less, from the viewpoint of improving the coating hardness and strength.

When the number-average molecular weight of the polyol is within the above range, the blocked polyisocyanate composition has excellent low-temperature curability when formed into a coating film, and particularly excellent hardness and strength. The number-average molecular weight Mn of the polyol is, for example, the number-average molecular weight based on polystyrene measured by GPC.

Examples of such polyols include a trimethylolpropane, glycerol, polycaprolactone polyols derived from a trihydric or higher polyhydric alcohol with a ε-caprolactone.

Examples of commercially available products of the polycaprolactone polyol include "Plaxel 303" (number-average molecular weight 300), "Plaxel 305" (number-average molecular weight 550), "Plaxel 308" (number-average molecular weight 850) and "Plaxel 309" (number-average molecular weight 900) manufactured by Daicel Corporation.

(Method for producing polyisocyanate)

The method for producing the polyisocyanate will be described in detail below.

The polyisocyanates, for example, can be obtained by carrying out an allophanate-formation reaction for forming allophanate groups, a uretdione-formation reaction for forming uretdione groups, an iminooxadiazinedione-formation reaction for forming iminooxadiazinedione groups, an isocyanurate-formation reaction for forming isocyanurate groups, a urethane-formation reaction for forming urethane groups and a biuret-formation reaction for forming biuret groups at once in the presence of an excess of an isocyanate monomer, and removing the unreacted isocyanate monomer after the completion of the reaction. That is, the polyisocyanate obtained by the above reactions is a reaction product in which a plurality of the above isocyanate monomers are bonded, and having one or more selected from the group consisting of an allophanate group, a uretdione group, an iminooxadiazinedione group, an isocyanurate group, a urethane group and a biuret group.

Further, the above reactions may be carried out separately and the separately obtained polyisocyanates may be mixed in a specific ratio.

From the viewpoint of ease of production, it is preferable to carry out the above reactions at once to obtain the polyisocyanate, and from the viewpoint of freely adjusting the molar ratio of each functional group, it is preferable to produce them separately and then mix them.

(1) Method for producing polyisocyanate containing allophanate group

The allophanate group-containing polyisocyanate is obtained by adding alcohol to an isocyanate monomer and using an allophanate-formation reaction catalyst.

The alcohol used for forming the allophanate group is preferably an alcohol formed only with carbon, hydrogen and oxygen.

Specific examples of the alcohol include, but are not limited to, a monoalcohol and a dialcohol. These alcohols may be used alone or in combination of two or more.

Examples of the monoalcohol include a methanol, ethanol, propanol, butanol, pentanol, hexanol, heptanol, octanol, and nonanol.

Examples of the dialcohol include an ethylene glycol, 1,3-butanediol, neopentyl glycol, and 2-ethylhexanediol.

Among the examples, the alcohol is preferably a monoalcohol, more preferably a monoalcohol having a molecular weight of 200 or less.

Examples of the allophanate-formation reaction catalyst include, but are not limited to, an alkyl carboxylic acid salt of tin, lead, zinc, bismuth, zirconium and zirconyl.

Examples of the tin alkylcarboxylic acid salt (organic tin compound) include a tin 2-ethylhexanoate, and dibutyltin dilaurate.

Examples of the lead alkylcarboxylic acid salt (organic lead compound) include a lead 2-ethylhexanoate.

Examples of the zinc alkylcarboxylic acid salt (organic zinc compound) include a zinc 2-ethylhexanoate.

Examples of the bismuth alkylcarboxylic acid salt include a bismuth 2-ethylhexanoate.

Examples of the zirconium alkylcarboxylic acid salt include a zirconium 2-ethylhexanoate.

Examples of the alkyl carboxylic acid salt of zirconyl include a zirconyl 2-ethylhexanoate. These catalysts may be used alone or in combination of two or more.

Further, the isocyanurate-formation reaction catalyst described later can also be used as the allophanate-formation reaction catalyst. When the allophanate-formation reaction is carried out using the isocyanurate-formation reaction catalyst described later, of course, an isocyanurate group-containing polyisocyanate (hereinafter sometimes referred to as "isocyanurate-type polyisocyanate") is also produced.

Among the catalysts, from the viewpoint of economical production, it is preferable to carry out the allophanate-formation reaction and the isocyanurate-formation reaction by using the isocyanurate-formation reaction catalyst described later as the allophanate-formation reaction catalyst.

The lower limit of the amount of the above-mentioned allophanate-formation reaction catalyst to be used is preferably 10 ppm by mass, more preferably 20 ppm by mass, even more preferably 40 ppm by mass, and particularly preferably 80 ppm by mass with respect to the mass of the charged isocyanate monomer.

The upper limit of the amount of the above-mentioned allophanate-formation reaction catalyst to be used is preferably 1,000 ppm by mass, more preferably 800 ppm by mass, even more preferably 600 ppm by mass, and particularly preferably 500 ppm by mass with respect to the mass of the charged isocyanate monomer.

That is, the amount of the above-mentioned allophanate-formation reaction catalyst to be used is preferably 10 ppm by mass or more and 1,000 ppm by mass or less, more preferably 20 ppm by mass or more and 800 ppm by mass or less, even more preferably 40 ppm by mass or more and 600 ppm by mass or less, and particularly preferably 80 ppm by mass or more and 500 ppm by mass or less with respect to the mass of the charged isocyanate monomer.

In addition, the lower limit of the allophanate-formation reaction temperature is preferably 40°C, more preferably 60°C, even more preferably 80°C, and particularly preferably 100°C.

In addition, the upper limit of the allophanate-formation reaction temperature is preferably 180°C, more preferably 160°C, and even more preferably 140°C.

That is, the allophanate-formation reaction temperature is preferably 40°C or higher and 180°C or lower, more preferably 60°C or higher and 160°C or lower, even more preferably 80°C or higher and 140°C or lower, particularly preferably 100°C or higher and 140°C or lower.

When the allophanate-formation reaction temperature is at least the above lower limit, the reaction rate can be further improved. When the allophanate-formation reaction temperature is at most the above upper limit, the coloration of the polyisocyanate tends to be more effectively suppressed.

(2) Method for producing polyisocyanate containing uretdione group

When the polyisocyanate having a uretdione group is derived from an isocyanate monomer, it can be produced, for example, by polymerizing the isocyanate monomer using a uretdione-formation reaction catalyst or by heating.

Examples of the uretdione-formation reaction catalyst include, but are not particularly limited to, a tertiary phosphines such as trialkylphosphine, tris(dialkylamino)phosphine, cycloalkylphosphine or the like, Lewis acids, and the like.

Examples of the trialkylphosphine include a tri-n-butylphosphine, and tri-n-octylphosphine.

Examples of tris(dialkylamino)phosphine include a tris-(dimethylamino)phosphine. like.

Examples of the cycloalkylphosphine include a cyclohexyl-di-n-hexylphosphine.

Examples of the Lewis acid include a boron trifluoride, and zinc oxychloride.

Many of the uretdione-formation reaction catalysts can simultaneously promote the isocyanurate-formation reaction.

When a uretdione-formation reaction catalyst is used, it is possible to stop the uretdione-formation reaction by adding a deactivator of the uretdione-formation reaction catalyst such as phosphoric acid or methyl paratoluenesulfonate at the time the desired yield is reached.

In addition, in the case of obtaining a polyisocyanate having a uretdione group by heating at least one diisocyanate selected from the group consisting of an aliphatic diisocyanate and an alicyclic diisocyanate without using a uretdione-formation reaction catalyst, the heating temperature is preferably 120°C or higher, and more preferably 150°C or higher and 170°C or lower. The heating time is preferably 1 hour or more and 4 hours or less.

(3) Method for producing polyisocyanate containing iminooxadiazinedione group

When the iminooxadiazinedione group-containing polyisocyanate is derived from an isocyanate monomer, an iminooxadiazinedione-formation reaction catalyst is usually used.

Examples of the iminooxadiazinedione-formation reaction catalyst include those shown in 1) or 2) below.

1) A (poly)hydrogen fluoride represented by a general formula of $M[F_n]$ or a general formula of $M[F_n(HF)_m]$.
(In the formula, m and n are integers that satisfy the relationship of m/n>0. M is an n-charged cation (mixture) or one or more radicals having n-valence in total.)
2) A compound composed of a compound represented by a general formula of $R^1-CR'_2-C(O)O-$ or a general formula of $R^2 =CR'-C(O)O-$, and a quaternary ammonium cation or a quaternary phosphonium cation.
(In the formula, $R^1$ and $R^2$ are each independently a linear, branched or cyclic saturated or unsaturated perfluoroalkyl group having 1 to 30 carbon atoms. A plurality of R' is independently a hydrogen atom, or an alkyl group or an aryl group having 1 to 20 carbon atoms which may contain a hetero atom.)

Specific examples of the compound 1) ((poly)hydrogen fluoride) include a tetramethylammonium fluoride hydrate and tetraethylammonium fluoride.

Specific examples of the compound 2) include a 3,3,3-trifluorocarboxylic acid, 4,4,4,3,3-pentafluorobutanoic acid, 5,5,5,4,4,3,3-heptafluoropentanoic acid, 3,3-difluoroprop-2-enoic acid.

Among the examples, the iminooxadiazinedione-formation reaction catalyst is preferably 1) from the viewpoint of easy availability, and preferably 2) from the viewpoint of safety.

Although the lower limit of the amount of the iminooxadiazinedione-formation reaction catalyst to be used is not particularly limited, from the viewpoint of reactivity, it is preferably 5 ppm by mass, more preferably 10 ppm by mass, and even more preferably 20 ppm by mass with respect to the isocyanate monomer a raw material, such as HDI.

The upper limit of the amount of the iminooxadiazinedione-formation reaction catalyst to be used is preferably 5,000 ppm by mass, more preferably 2,000 ppm by mass, and even more preferably 500 ppm by mass with respect to the isocyanate monomer as a raw material, such as HDI or the like from the viewpoint of suppressing the coloration and discoloration of the product and controlling the reaction.

That is, the amount of the iminooxadiazinedione-formation reaction catalyst to be used is preferably 5 ppm by

mass or more and 5,000 ppm by mass or less, more preferably 10 ppm by mass or more and 2,000 ppm by mass or less, and even more preferably 20 ppm or more and 500 ppm by mass or less with respect to the isocyanate monomer as a raw material, such as HDI.

Although the lower limit of the reaction temperature for the iminooxadiazinedione-formation reaction is not particularly limited, from the viewpoint of reaction rate, it is preferably 40°C, more preferably 50°C, and even more preferably 60°C.

The upper limit of the reaction temperature for the iminooxadiazinedione-formation reaction is preferably 150°C, more preferably 120°C, and even more preferably 110°C from the viewpoint of suppressing coloration and discoloration of the product.

That is, the reaction temperature for the iminooxadiazinedione-formation reaction is preferably 40°C or higher and 150°C or lower, more preferably 50°C or higher and 120°C or lower, and even more preferably 60°C or higher and 110°C or lower.

The iminooxadiazinedione-formation reaction may be stopped at the time the iminooxadiazinedione-formation reaction reaches a desired amount of the iminooxadiazinedione group. The iminooxadiazinedione-formation reaction can be stopped by, for example, adding an acidic compound to the reaction solution. Examples of the acidic compound include a phosphoric acid, acidic phosphoric acid esters, sulfuric acid, hydrochloric acid, and sulfonic acid compounds. Thereby, the iminooxadiazinedione-formation reaction catalyst is neutralized or deactivated by thermal decomposition or chemical decomposition. After stopping the reaction, filtration is performed if necessary.

(4) Method for producing isocyanurate group-containing polyisocyanate

Examples of the catalyst for deriving the polyisocyanate containing an isocyanurate group from an isocyanate monomer include a generally used isocyanurate-formation reaction catalyst.

Although the isocyanurate-formation reaction catalyst is not particularly limited, it is generally preferable to have basicity. Specific examples of the isocyanurate-formation reaction catalyst include those shown below.

1) Hydroxides of tetraalkylammoniums such as tetramethylammonium, tetraethylammonium, tetrabutylammonium or the like, and weak organic acid salts such as acetate, propionate, octylate, caprate, myristate, benzoate of the tetraalkylammoniums.
2) Hydroxides of aryltrialkylammoniums such as benzyltrimethylammonium, trimethylphenylammonium or the like, and weak organic acid salts such as acetate, propionate, octylate, caprate, myristate, benzoate of the aryltrialkylammoniums.
3) Hydroxides of hydroxyalkylammoniums such as trimethylhydroxyethylammonium, trimethylhydroxypropylammonium, triethylhydroxyethylammonium, triethylhydroxypropylammonium and weak organic acid salts such as acetate, propionate, octylate, caprate, myristate, benzoate of the hydroxyalkylammonium.
4) Metal salts such as tin, zinc, lead or the like of alkylcarboxylic acids such as acetic acid, propionic acid, caproic acid, octylic acid, capric acid, and myristic acid.
5) Alcoholates of metals such as sodium, and potassium.
6) Aminosilyl group-containing compound such as hexamethylene disilazane
7) Mannich bases.
8) Mixture of a tertiary amine and an epoxy compound.
9) Phosphorus compounds such as tributylphosphine.

Among the examples, from the viewpoint of hardly generating unnecessary byproducts, the isocyanurate-formation reaction catalyst is preferably a quaternary ammonium hydroxide or an organic weak acid salt of quaternary ammonium, and more preferably a hydroxide of tetraalkylammonium, a weak organic acid salt of tetraalkylammonium, a hydroxide of aryltrialkylammonium, or a weak organic acid salt of aryltrialkylammonium.

The upper limit of the amount of the above-mentioned isocyanurate-formation reaction catalyst to be used is preferably 1,000 ppm by mass, more preferably 500 ppm by mass, and even more preferably 100 ppm by mass with respect to the mass of the charged isocyanate monomer.

On the other hand, although the lower limit of the amount of the above-mentioned isocyanurate-formation reaction catalyst to be used is not particularly limited, it may be, for example, 10 ppm by mass.

The isocyanurate-formation reaction temperature is preferably 50°C or higher and 120°C or lower, and more preferably 60°C or higher and 90°C or lower. When the isocyanurate-formation reaction temperature is not more than the above upper limit, there is a tendency that the coloration of the polyisocyanate can be suppressed more effectively.

When the desired conversion rate (ratio of the mass of the polyisocyanate produced in the isocyanurate-formation reaction to the mass of the charged isocyanate monomer) is reached, the isocyanurate-formation reaction is stopped by adding an acidic compound (for example, phosphoric acid, acidic phosphoric acid ester).

In order to obtain polyisocyanate, it is necessary to stop the reaction at an early stage. However, since the initial reaction rate of the isocyanurate-formation reaction is very fast, it is difficult to stop the progress of the reaction at the initial stage, and it is necessary to carefully select the reaction conditions, especially the catalyst addition amount and the addition method. For example, a method of adding the catalyst in divided portions at regular intervals is recommended as a suitable method.

Therefore, the conversion rate of the isocyanurate-formation reaction for obtaining polyisocyanate is preferably 10% or more and 60% or less, more preferably 15% or more and 55% or less, and even more preferably 20% or more and 50% or less.

When the conversion rate of the isocyanurate-formation reaction is not more than the above upper limit, the blocked polyisocyanate component can have a lower viscosity. Further, when the conversion rate of the isocyanurate-formation reaction is at least the above lower limit, the reaction termination operation can be more easily performed.

Further, when deriving a polyisocyanate containing an isocyanurate group, an alcohol having a valence of 1 or more and 6 or less can be used in addition to the above isocyanate monomer.

Examples of the monohydric to hexahydric alcohols that can be used include non-polymerizable alcohols and polymerizable alcohols. The term "non-polymerizable alcohol" as used herein means an alcohol having no polymerizable groups. On the other hand, the term "polymerizable alcohol" means an alcohol obtained by polymerizing a monomer having a polymerizable group and a hydroxyl group.

Examples of the non-polymerizable alcohols include polyhydric alcohols such as monoalcohols, diols, triols, tetraols.

Examples of the monoalcohols include a methanol, ethanol, n-propanol, isopropanol, n-butanol, isobutanol, sec-butanol, n-pentanol, n-hexanol, n-octanol, n-nonanol, 2-ethylbutanol. 2,2-dimethylhexanol, 2-ethylhexanol, cyclohexanol, methylcyclohexanol, and ethylcyclohexanol.

Examples of the diols include an ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1, 6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol, and 2,2-diethyl-1,3-propane.

Examples of the triols include a glycerin, trimethylolpropane.

Examples of the tetraols include a pentaerythritol.

Examples of the polymerizable alcohol include, but are not particularly limited, a polyester polyols, polyether polyols, acrylic polyols, and polyolefin polyols.

The polyester polyols are not particularly limited, and examples thereof include a product obtained by a condensation reaction of a single dibasic acid or a mixture of dibasic acids with a single polyhydric alcohol or a mixture of polyhydric alcohols.

The dibasic acid is not particularly limited, and examples thereof include at least one dibasic acid selected from the group consisting of carboxylic acids such as succinic acid, adipic acid, sebacic acid, dimer acid, maleic anhydride, phthalic anhydride, isophthalic acid, and terephthalic acid.

The polyhydric alcohol is not particularly limited, and examples thereof include at least one polyhydric alcohol selected from the group consisting of an ethylene glycol, propylene glycol, diethylene glycol, neopentyl glycol, trimethylolpropane, and glycerin.

Examples of the polyester polyols include polycaprolactones obtained by a ring-opening polymerization of ε-caprolactone using the above polyhydric alcohol.

The polyether polyols are not particularly limited, and examples thereof include polyether polyols obtained by adding a single alkylene oxide or a mixture of alkylene oxides to a single polyhydric alcohol or a mixture of polyhydric alcohols using an alkali metal hydroxide or a strongly basic catalyst, polyether polyols obtained by reacting a polyamine compound with an alkylene oxide, and so-called polymer polyols obtained by polymerizing an acrylamide and the like using the above polyethers as a medium.

Examples of the alkali metal include a lithium, sodium, and potassium.

Examples of the strongly basic catalyst include an alcoholate, and alkylamine.

Examples of the polyhydric alcohol include the same as those exemplified in the above polyester polyols.

Examples of the alkylene oxide include an ethylene oxide, propylene oxide, butylene oxide, cyclohexene oxide, and styrene oxide.

Examples of the polyamine compound include an ethylenediamine.

The acrylic polyols are not particularly limited, and examples thereof include acrylic polyols obtained by copolymerizing a single ethylenically unsaturated bond-containing monomer or a mixture of ethylenically unsaturated bond-containing monomers having a hydroxyl group with a single ethylenically unsaturated bond-containing monomer or a mixture of other ethylenically unsaturated bond-containing monomers copolymerizable therewith.

The ethylenically unsaturated bond-containing monomer having a hydroxyl group is not particularly limited, and

examples thereof include a hydroxyethyl acrylate, hydroxypropyl acrylate, hydroxybutyl acrylate, hydroxyethyl methacrylate, hydroxypropyl methacrylate, and hydroxybutyl methacrylate.

Said other ethylenically unsaturated bond-containing monomers copolymerizable with the ethylenically unsaturated bond-containing monomer having a hydroxyl group are not particularly limited, and examples thereof include an acrylic acid ester, methacrylic acid ester, unsaturated carboxylic acid, unsaturated amide, vinyl-based monomer, and vinyl-based monomer having a hydrolyzable silyl group.

Examples of the acrylic acid ester include a methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, and phenyl acrylate.

Examples of the methacrylic acid ester include a methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, and phenyl methacrylate.

Examples of the unsaturated carboxylic acid include an acrylic acid, methacrylic acid, maleic acid, and itaconic acid.

Examples of the unsaturated amide include an acrylamide, methacrylamide, N,N-methylenebisacrylamide, diacetone acrylamide, diacetone methacrylamide, maleic acid amide, and maleimide.

Examples of the vinyl-based monomer include a glycidyl methacrylate, styrene, vinyltoluene, vinyl acetate, acrylonitrile, and dibutyl fumarate.

Examples of the vinyl-based monomer having a hydrolyzable silyl group include a vinyltrimethoxysilane, vinylmethyldimethoxysilane, and $\gamma$-(meth)acryloxypropyltrimethoxysilane.

Examples of the polyolefin polyols include a terminal hydroxylated polybutadiene and a hydrogenated product thereof.

(5) Method for producing urethane group-containing polyisocyanate

When deriving a polyisocyanate containing a urethane group from an isocyanate monomer, the polyisocyanate containing a urethane group can be produced from an isocyanate by mixing an excess isocyanate monomer, the above polyol and optionally an alcohol other than the above polyol, and adding a urethane-formation reaction catalyst if necessary.

Examples of the polyol include the same as those exemplified in the above-mentioned "polyol".

Examples of the alcohol other than the polyol include those exemplified in the above-mentioned "method for producing polyisocyanate containing isocyanurate group" but excluding those exemplified in the above-mentioned "polyol".

The urethane-formation reaction catalyst is not particularly limited, and examples thereof include tin compounds, zinc compounds, amine compounds, and the like.

The urethane-formation reaction temperature is preferably 50°C or higher and 160°C or lower, and more preferably 60°C or higher and 120°C or lower.

When the urethane-formation reaction temperature is not more than the above upper limit, coloration of the polyisocyanate tends to be suppressed more effectively.

The urethane-formation reaction time is preferably 30 minutes or more and 4 hours or less, more preferably 1 hour or more and 3 hours or less, and even more preferably 1 hour or more and 2 hours or less.

The molar ratio of the isocyanate group of the isocyanate monomer to the hydroxyl group of the polyol (and the alcohols other than the polyol, if necessary) is preferably from 2/1 to 50/1. When the molar ratio is not less than the above lower limit, the polyisocyanate can have a lower viscosity. When the molar ratio is not more than the above upper limit, the yield of the urethane group-containing polyisocyanate can be further increased.

(6) Method for producing biuret group-containing polyisocyanate

The biuretizing agent for deriving a polyisocyanate containing a biuret group from an isocyanate monomer is not particularly limited, and examples thereof include water, a monohydric tertiary alcohol, formic acid, organic primary monoamine, and organic primary diamine.

The molar amount of the isocyanate group is preferably 6 mol or more, more preferably 10 mol or more, and even more preferably 10 mol or more and 80 mol or less, with respect to 1 mol of the biuret-forming agent. If the molar amount of the isocyanate group with respect to 1 mol of the biuret-forming agent is at least the above lower limit, the polyisocyanate will have a sufficiently low viscosity, and if it is at most the above upper limit, the low-temperature curability of the resin film will be further improved.

In addition, a solvent may be used in the biuret-formation reaction. Any solvent may be used as long as it dissolves the isocyanate monomer and the biuretizing agent such as water to form a uniform phase under the reaction

conditions.

Specific examples of the solvent include ethylene glycol-based solvents and phosphoric acid-based solvents.

Examples of the ethylene glycol-based solvent include an ethylene glycol monomethyl ether acetate, ethylene glycol monoethyl ether acetate, ethylene glycol mono-n-propyl ether acetate, ethylene glycol monoisopropyl ether acetate, ethylene glycol mono-n-butyl ether acetate, ethylene glycol diacetate, ethylene glycol dimethyl ether, ethylene glycol diethyl ether, ethylene glycol di-n-propyl ether, ethylene glycol diisopropyl ether, ethylene glycol di-n-butyl ether, ethylene glycol methyl ethyl ether, ethylene glycol methyl isopropyl ether, ethylene glycol methyl-n-butyl ether, ethylene glycol ethyl-n-propyl ether, ethylene glycol ethyl isopropyl ether, ethylene glycol ethyl-n-butyl ether, ethylene glycol-n-propyl-n-butyl ether, ethylene glycol isopropyl-n-butyl ether, diethylene glycol monomethyl ether acetate, diethylene glycol monoethyl ether acetate, diethylene glycol mono-n-propyl ether acetate, diethylene glycol monoisopropyl ether acetate, diethylene glycol mono-n-butyl ether acetate, diethylene glycol diacetate, diethylene glycol dimethyl ether, diethylene glycol diethyl ether, diethylene glycol di-n-propyl ether, diethylene glycol diisopropyl ether, diethylene glycol di-n-butyl ether, diethylene glycol methyl ethyl ether, diethylene glycol methyl isopropyl ether, Diethylene glycol methyl-n-propyl ether, diethylene glycol methyl-n-butyl ether, diethylene glycol ethyl isopropyl ether, diethylene glycol ethyl-n-propyl ether, diethylene glycol ethyl-n-butyl ether, diethylene glycol-n-propyl-n-butyl ether, and diethylene glycol isopropyl-n-butyl ether.

Examples of the phosphoric acid-based solvent include a trimethyl phosphate, triethyl phosphate, tripropyl phosphate, and tributyl phosphate.

These solvents may be used alone or by mixing two or more of them.

Among the examples, ethylene glycol monomethyl ether acetate, ethylene glycol monoethyl ether acetate, ethylene glycol diacetate or diethylene glycol dimethyl ether is preferable as the ethylene glycol solvent.

Further, as the phosphoric acid-based solvent, a trimethyl phosphate or a triethyl phosphate is preferable.

The biuret-formation reaction temperature is preferably 70°C or higher and 200°C or lower, more preferably 90°C or higher and 180°C or lower. When the temperature is not more than the above upper limit, coloration of the polyisocyanate tends to be more effectively prevented.

Each of the above-mentioned allophanate-formation reaction, uretdione-formation reaction, iminooxadiazinedione-formation reaction, isocyanurate-formation reaction, urethane-formation reaction, and biuret-formation reaction may be carried out sequentially, or some of them may be carried out in parallel.

The unreacted isocyanate monomer can be removed from the reaction solution after the reaction by a thin film distillation, and extraction. thereby obtaining the polyisocyanate.

Further, an antioxidant or an ultraviolet absorber may be added to the obtained polyisocyanate for the purpose of suppressing the coloration during storage.

Examples of the antioxidant include a hindered phenol such as 2,6-di-tert-butyl-p-cresol.

Examples of the ultraviolet absorber include a benzotriazole and benzophenone. These antioxidants and ultraviolet absorbers may be used alone or in combination of two or more. The addition amount thereof is preferably 10 ppm by mass or more and 500 ppm by mass or less with respect to the mass of the polyisocyanate.

(Average number of isocyanate functional groups of polyisocyanate)

The average number of isocyanate functional groups of the polyisocyanate is preferably 2 or more from the viewpoint of enhancing the low-temperature curability of the obtained resin film, and from the viewpoint of having both the low-temperature curability of the obtained resin film and the compatibility with a polyhydric alcohol compound, the average number of isocyanate functional groups of the polyisocyanate is preferably 3 or more and 20 or less, more preferably 3.3 or more and 10 or less, particularly preferably 3.8 or more and 9 or less, and most preferably 4.2 or more and 8 or less.

The average number of isocyanate functional groups of the polyisocyanate can be measured by the method described in the Examples below.

[Blocking agent]

The blocking agent used for producing the blocked polyisocyanate contains a malonic acid ester having a secondary alkyl group or a malonic acid ester having a primary alkyl group, and a malonic acid ester having a tertiary alkyl group, and more preferably contains a malonic acid ester having a secondary alkyl group and malonic acid ester having a tertiary alkyl group. The blocking agent may contain one type of malonic acid ester having a secondary alkyl group, one type of malonic acid ester having a primary alkyl group, and one type of malonic acid ester having a tertiary alkyl group, or may contain two or more types in combination.

The malonic acid ester having a primary alkyl group is not particularly limited, and examples thereof include a dimethyl malonate, diethyl malonate, dipropyl malonate, dibutyl malonate, dicyclohexyl malonate, and diphenyl malonate.

Among the examples, a diethyl malonate is preferable as the malonic acid ester having a primary alkyl group.

The malonic acid ester having a secondary alkyl group is not particularly limited, and examples thereof include a di-sec-butyl malonate, diisopropyl malonate, and isopropylethyl malonate. Among the examples, a diisopropyl malonate is preferable as the malonate ester having a secondary alkyl group.

The malonic acid ester having a tertiary alkyl group is not particularly limited, and examples thereof include a di-tert-butyl malonate, di-tert-pentyl malonate, tert-butylethyl malonate. Among the examples, a di-tert-butyl malonate is preferable.

Among the examples, the blocking agent preferably contains a diisopropyl malonate as the malonic acid ester having a secondary alkyl group and a di-tert-butyl malonate as the malonate ester having a tertiary alkyl group.

(Other blocking agents)

The blocking agent used in the production of the blocked polyisocyanate may further contain another blocking agent in addition to the malonic acid ester having a secondary alkyl group and the malonic acid ester having a tertiary alkyl group as long as the storage stability of the resin composition and the low-temperature curability of the obtained resin film are not impaired.

In addition, the content of the malonic acid ester having a secondary alkyl group and the malonic acid ester having a tertiary alkyl group is 50 mol% or more, more preferably 70 mol% or more, even more preferably 90 mol% or more, particularly preferably 95 mol% or more, and most preferably 100 mol% or more, with respect to the total molar amount of all the blocking agents used in the production of the blocked polyisocyanate.

When the content of the malonic acid ester having a secondary alkyl group and the malonic acid ester having a tertiary alkyl group is within the above range, the low-temperature curability of the obtained resin film can be further improved.

Examples of said other blocking agents include, 1) alcohol compounds, 2) alkylphenol compounds, 3) phenolic compounds, 4) active methylene compounds other than the malonic acid ester having a secondary alkyl group and the malonic acid ester having a tertiary alkyl group, 5) mercaptan compounds, 6) acid amide compounds, 7) acid imide-based compound, 8) imidazole compounds, 9) urea compounds, 10) oxime compounds, 11) amine compounds, 12) imide compounds, 13) bisulfite, 14) pyrazole-based compounds, 15) triazole compounds. More specific examples of the blocking agent include those shown below.

1) Alcohol compounds: alcohols such as methanol, ethanol, 2-propanol, n-butanol, sec-butanol, 2-ethyl-1-hexanol, 2-methoxyethanol, 2-ethoxyethanol, 2-butoxyethanol.
2) Alkylphenol compounds: Mono- and dialkylphenols having an alkyl group having 4 or more carbon atoms as a substituent. Specific examples of the alkylphenol compounds include monoalkylphenols such as n-propylphenol, iso-propylphenol, n-butylphenol, sec-butylphenol, tert-butylphenol, n-hexylphenol, 2-ethylhexylphenol, n-octylphenol, n-nonylphenol or the like; dialkylphenols such as di-n-propylphenol, diisopropylphenol, isopropyl cresol, di-n-butylphenol, di-tert-butylphenol, di-sec-butylphenol, di-n-octylphenol, di-2-ethylhexylphenol, di-n-nonylphenol.
3) Phenolic compounds: phenol, cresol, ethylphenol, styrenated phenol, hydroxybenzoic acid ester.
4) Active methylene compounds: methyl acetoacetate, ethyl acetoacetate, methyl isobutanoyl acetate, ethyl isobutanoyl acetate, acetylacetone.
5) Mercaptan compounds: butyl mercaptan, dodecyl mercaptan.
6) Acid amide compounds: acetanilide, acetic amide, ε-caprolactam, δ-valerolactam, γ-butyrolactam.
7) Acid imide compounds: succinimide, maleimide.
8) Imidazole compounds: imidazole, 2-methylimidazole.
9) Urea compounds: urea, thiourea, ethylene urea.
10) Oxime compounds: formaldoxime, acetoaldoxime, acetoxime, methylethylketoxime, cyclohexanone oxime.
11) Amine compounds: diphenylamine, aniline, carbazole, di-n-propylamine, diisopropylamine, isopropylethylamine.
12) Imine compounds: ethyleneimine, polyethyleneimine.
13) Bisulfite compound: sodium bisulfite.
14) Pyrazole compounds: pyrazole, 3-methylpyrazole, 3,5-dimethylpyrazole.
15) Triazole compounds: 3,5-dimethyl-1,2,4-triazole.

[Hydrophilic compound]

At least a part of the blocked polyisocyanate may have a constitutional unit derived from a hydrophilic compound, that is, a hydrophilic group.

The hydrophilic compound is a compound having a hydrophilic group. The hydrophilic compound preferably

has, in addition to the hydrophilic group, one or more active hydrogen groups per molecule of the hydrophilic compound for reacting with at least one of the isocyanate groups contained in the polyisocyanate. Specific examples of the active hydrogen group include a hydroxyl group, mercapto group, carboxylic acid group, amino group, thiol group.

Examples of the hydrophilic compound include a nonionic compound, cationic compound, anionic compound. These hydrophilic compounds may be used alone or in combination of two or more. Among the examples, the hydrophilic compound is preferably a nonionic compound from the viewpoint of easy availability and being less susceptible to electrical interaction with other components, and from the viewpoint of suppressing the decrease in hardness and strength of the obtained resin film and improving the emulsifiability, an anionic compound is preferable.

(Nonionic compound)

Specific examples of the nonionic compound include a monoalcohol and a compound obtained by adding an ethylene oxide to a hydroxyl group of an alcohol. Examples of the monoalcohol include a methanol, ethanol, and butanol. Examples of the compound obtained by adding an ethylene oxide to a hydroxyl group of an alcohol include an ethylene glycol, diethylene glycol, and polyethylene glycol. These nonionic compounds also have active hydrogen groups that react with the isocyanate groups.

Among the examples, as the nonionic compound, a polyethylene glycol monoalkyl ether in which an ethylene oxide is added to a hydroxyl group of a monoalcohol is preferable because the water dispersibility of the blocked polyisocyanate composition can be improved with a small amount.

The addition number of ethylene oxide added to the compound to which the ethylene oxide is added is preferably 4 or more and 30 or less, and more preferably 4 or more and 25 or less. When the addition number of ethylene oxide is at least the above lower limit, there is a tendency that water dispersibility can be more effectively imparted to the blocked polyisocyanate composition, and when the addition number of ethylene oxide is at most the above upper limit, precipitates of the blocked polyisocyanate composition tend to be less likely to be generated during low-temperature storage.

The lower limit of the amount of the nonionic hydrophilic groups added to the blocked polyisocyanate (hereinafter, sometimes referred to as "nonionic hydrophilic group content") is preferably 0.1% by mass, more preferably 0.15% by mass, even more preferably 0.2% by mass, and particularly preferably 0.25% by mass with respect to the mass of the solid content of the hydrophilic polyisocyanate composition from the viewpoint of water dispersion stability of the blocked polyisocyanate composition.

Further, the upper limit of the nonionic hydrophilic group content is preferably 55% by mass, more preferably 50% by mass, even more preferably 48% by mass, and particularly preferably 44% by mass with respect to the mass of the solid content of the blocked polyisocyanate composition from the viewpoint of water resistance of the obtained resin film.

That is, the nonionic hydrophilic group content is preferably 0.1% by mass or more and 55% by mass or less, and more preferably 0.15% by mass or more and 50% by mass or less, even more preferably 0.20% by mass or more and 48% by mass or less, and particularly preferably 0.25% by mass or more and 44% by mass or less with respect to the mass of the solid content of the blocked polyisocyanate composition.

When the nonionic hydrophilic group content is within the above range, the blocked polyisocyanate composition tends to be more dispersed in water and a homogeneous film tends to be obtained.

From the viewpoint of suppressing the decrease in hardness and strength of the obtained resin film, when the amount of the nonionic hydrophilic group added to the blocked polyisocyanate is represented by a molar ratio, it is preferably 0.05 mol% or more and 15 mol% or less, more preferably 0.10 mol% or more and 12 mol% or less, even more preferably 0.10 mol% or more and 8 mol% or less, still even more preferably 0.10 mol% or more and 6 mol% or less, still even more preferably 0.15 mol% or more and 4 mol% or less, particularly preferably 0.15 mol% or more and 3 mol% or less, and most preferably 0.15 mol% or more and 2 mol% or less with respect to 100 mol% of isocyanate groups of the raw material polyisocyanate.

(Cationic compound)

Specific examples of the cationic compound include compounds having both a cationic hydrophilic group and an active hydrogen group. Further, a compound having an active hydrogen group such as a glycidyl group and a compound having a cationic hydrophilic group such as a sulfide, phosphine or the like may be combined to form a hydrophilic compound. In this case, the compound having an isocyanate group is reacted with the compound having an active hydrogen group in advance to add a functional group such as a glycidyl group, and then the compound such as a sulfide, phosphine is reacted. From the viewpoint of ease of production, a compound having both a cationic hydrophilic group and an active hydrogen group is preferable.

Specific examples of the compound having both a cationic hydrophilic group and an active hydrogen group

include a dimethylethanolamine, diethylethanolamine, diethanolamine, and methyldiethanolamine. The tertiary amino group added by using these compounds can also be quaternized with, for example, dimethyl sulfate or diethyl sulfate.

The reaction between the cationic compound and the alicyclic polyisocyanate can be carried out in the presence of a solvent. In this case, the solvent preferably does not contain an active hydrogen group, and specific examples thereof include an ethyl acetate, propylene glycol monomethyl ether acetate, and dipropylene glycol dimethyl ether.

The cationic hydrophilic group added to the blocked polyisocyanate is preferably neutralized with a compound having an anionic group. Specific examples of the anionic group include a carboxyl group, sulfonic acid group, phosphoric acid group, halogen group, and a sulfuric acid group

Specific examples of the compound having a carboxyl group include a formic acid, acetic acid, propionic acid, butyric acid, and lactic acid.

Specific examples of the compound having a sulfonic acid group include an ethanesulfonic acid.

Specific examples of the compound having a phosphoric acid group include a phosphoric acid, and acidic phosphoric acid ester.

Specific examples of the compound having a halogen group include a hydrochloric acid.

Specific examples of the compound having a sulfate group include a sulfuric acid.

Among the examples, as the compound having an anionic group, a compound having a carboxyl group is preferable, and an acetic acid, propionic acid or butyric acid is more preferable.

(Anionic compound)

Specific examples of the anionic hydrophilic group include a carboxyl group, sulfonic acid group, phosphoric acid group, halogen group and sulfuric acid group.

Specific examples of the anionic compound include a compound having both an anionic group and an active hydrogen group, and more specifically, include a monohydroxycarboxylic acid and a compound having a carboxyl group of polyhydroxycarboxylic acid as an anionic group.

Examples of the monohydroxycarboxylic acid include a 1-hydroxyacetic acid, 3-hydroxypropanoic acid, 12-hydroxy-9-octadecanoic acid, hydroxypivalic acid (hydroxypivalic acid), and lactic acid.

Examples of the compound having a carboxyl group of polyhydroxycarboxylic acid as an anionic group include a dimethylolacetic acid, 2,2-dimethylolbutyric acid, 2,2-dimethylolpentanoic acid, dihydroxysuccinic acid, and dimethylolpropionic acid.

Moreover, a compound having both a sulfonic acid group and an active hydrogen group can also be exemplified, and more specifically, an isethionic acid can be exemplified.

Among the examples, a hydroxypivalic acid or dimethylolpropionic acid is preferable as the compound having both an anionic group and an active hydrogen group.

The anionic hydrophilic group added to the blocked polyisocyanate is preferably neutralized with an amine compound that is a basic substance.

Specific examples of the amine compound include an ammonia, and water-soluble amino compounds.

Specific examples of the water-soluble amino compound include a monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methyl ethanolamine, dimethylethanolamine, diethyl ethanolamine, and morpholine like. Further, tertiary amines such as a triethylamine, dimethylethanolamine can also be exemplified and used. These amine compounds may be used alone or in combination of two or more.

<Other components>

The blocked polyisocyanate composition of the present embodiment may further contain additives such as a solvent in addition to the above blocked polyisocyanate.

Examples of the solvent include a 1-methylpyrrolidone, ethylene glycol monoethyl ether, diethylene glycol monoethyl ether, ethylene glycol monomethyl ether, diethylene glycol monomethyl ether, dipropylene glycol monomethyl ether, propylene glycol monomethyl ether, 3-methoxy-3-methyl-1-butanol, ethylene glycol diethyl ether, diethylene glycol diethyl ether, ethylene glycol dimethyl ether, diethylene glycol dimethyl ether, dipropylene glycol dimethyl ether (DPDM), propylene glycol dimethyl ether, methyl ethyl ketone, acetone, methyl isobutyl ketone, propylene glycol monomethyl ether acetate, ethanol, methanol, iso-propanol, 1-propanol, iso-butanol, 1-butanol, tert-butanol, 2-ethylhexanol, cyclohexanol, ethylene glycol, diethylene glycol, triethylene glycol, propylene glycol, dipropylene glycol, 1,4-butanediol, 1,3-butanediol, ethyl acetate, isopropyl acetate, butyl acetate, toluene, xylene, pentane, iso-pentane, hexane, iso-hexane, cyclohexane, solvent naphtha, and mineral spirits. These solvents may be used alone or in combination of two or more. From the viewpoint of dispersibility in water, a solvent having a solubility in water of 5% by mass or more is preferable,

and specifically, DPDM is preferable.

<Method for producing blocked polyisocyanate composition>

The method for producing the blocked poly isocyanate composition is not particularly limited, and examples thereof include the following two methods.

1) Method of reacting the polyisocyanate with the malonic acid ester having a tertiary alkyl group, and the malonic acid ester having a secondary alkyl group or the malonic acid ester having a primary alkyl group;
2) Method of reacting the polyisocyanate with at least one blocking agent selected from the group consisting of the malonic acid ester having a tertiary alkyl group, the malonic acid ester having a secondary alkyl group and the malonic acid ester having a primary alkyl group, and adding an alcohol having a chain alkyl group to the resulting reaction product to transesterify the terminal ester moiety of the reaction product, thereby introducing an alkyl group derived from the alcohol, followed by removing the residual alcohol by distillation under reduced pressure.

The alcohol having a chain alkyl group used in the method 2) is preferably a monoalcohol, and examples of the monoalcohol include monoalcohols having a linear alkyl group such as methanol, ethanol, propanol, butanol; monoalcohols having a branched alkyl group such as isopropanol, isobutanol, and tert-butanol. The chain alkyl group contained in the alcohol may have the same chain alkyl group as that of the blocking agent, or may have a different chain alkyl group from that of the blocking agent. When it has a chain alkyl group different from that of the blocking agent, it is preferable to use a monoalcohol having a chain alkyl group having a different number of alkyl substitutions from the blocking agent. Specifically, for example, when a malonic acid ester having a secondary alkyl group is used alone as the blocking agent, a monoalcohol having a tertiary alkyl group can be used.

Among the above two methods, the method 1) is preferable in consideration of facilitation of the steps and ease of the control of the molar ratio of constitutional unit (II)/constitutional unit (I).

The blocking reaction between the polyisocyanate and the blocking agent can be carried out with or without the presence of a solvent, and a blocked polyisocyanate can be obtained.

As the blocking agent, the malonic acid esters having a primary alkyl group, the malonic acid esters having a secondary alkyl group and the malonic acid esters having a tertiary alkyl group may be used alone, or in combination of two or more.

The addition amount of the blocking agent is generally 80 mol% or more and 200 mol% or less, preferably 90 mol% or more and 150 mol% or less with respect to the total molar amount of the isocyanate groups.

In addition, in the blocking agent to be added, each of the molar ratio of the constitutional unit derived from the malonic acid ester having a secondary alkyl group to the constitutional unit derived from the malonic acid ester having a tertiary alkyl group [(malonic acid ester having secondary alkyl group)/(malonic acid ester having tertiary alkyl group)] and the molar ratio of the constitutional unit derived from the malonic acid ester having a primary alkyl group to the constitutional unit derived from the malonic acid ester having a tertiary alkyl group [(malonic acid ester having primary alkyl group)/(malonic acid ester having tertiary alkyl group) is more than 5/95 and less than 95/5, preferably 7/93 or more and 93/7 or less, more preferably 10/90 or more and 93/7 or less, even more preferably 20/80 or more and 93/7 or less, particularly preferably 30/70 or more and 93/7 or less, and most preferably 35/65 or more and 93/7 or less. When the molar ratio is at least the above lower limit, the storage stability of the resin composition can be improved, and when it is at most the above upper limit, the low-temperature curability of the obtained resin film can be improved.

When a solvent is used, a solvent inert to the isocyanate group may be used.

When a solvent is used, the content of the non-volatile component derived from the polyisocyanate and the blocking agent is generally 10 parts by mass or more and 95 parts by mass or less, preferably 20 parts by mass or more and 80 parts by mass or less, and more preferably 30 parts by mass or more and 75 parts by mass or less with respect to 100 parts by mass of the blocked polyisocyanate composition.

In the blocking reaction, organic metal salts of tin, zinc, lead, tertiary amine compounds and alkali metal alcoholates of sodium may be used as catalysts.

Although the addition amount of the catalyst varies depending on the temperature of the blocking reaction, it is generally 0.05 parts by mass or more and 1.5 parts by mass or less, and preferably 0.1 parts by mass or more and 1.0 part by mass or less with respect to 100 parts by mass of the polyisocyanate.

The blocking reaction can be generally carried out at -20°C or higher and 150°C or lower, preferably 0°C or higher and 100°C or lower, and more preferably 10°C or higher and 80°C or lower. When the blocking reaction temperature is at least the above lower limit, the reaction rate can be further increased, and when it is at most the above upper limit, side reactions can be further suppressed.

After the blocking reaction, neutralization treatment may be performed by adding an acidic compound.

An inorganic acid or an organic acid may be used as the acidic compound. Examples of the inorganic acid

include a hydrochloric acid, phosphorous acid, and phosphoric acid. Examples of the organic acid include a methanesulfonic acid, p-toluenesulfonic acid, dioctyl phthalate, and dibutyl phthalate.

In addition, when a hydrophilic compound is used, it can be obtained by reacting the polyisocyanate, the blocking agent and the hydrophilic compound.

It is allowable that the reaction between the polyisocyanate and the hydrophilic compound and the reaction between the polyisocyanate and the blocking agent be carried out at the same time, or either of the reactions be carried out in advance and then the second and subsequent reactions be carried out. Among them, it is preferable to carry out the reaction between the polyisocyanate and the hydrophilic compound in advance to obtain a hydrophilic compound-modified polyisocyanate modified with the hydrophilic compound, followed by carrying out the reaction between the obtained hydrophilic compound-modified polyisocyanate and the blocking agent.

In the reaction between the polyisocyanate and the hydrophilic compound, an organic metal salt, a tertiary amine compound, or an alkali metal alcoholate may be used as a catalyst. Examples of the metal constituting the organic metal salt include a tin, zinc, and lead. Examples of the alkali metal include a sodium.

The reaction temperature between the polyisocyanate and the hydrophilic compound is preferably -20°C or higher and 150°C or lower, and more preferably 30°C or higher and 130°C or lower. When the reaction temperature is at least the above lower limit, the reactivity tends to be higher. Moreover, when the reaction temperature is at most the above upper limit, side reactions tend to be more effectively suppressed.

It is preferable to completely react the hydrophilic compound with the polyisocyanate so that the hydrophilic compound does not remain in an unreacted state. When the hydrophilic compound does not remain in an unreacted state, it tends to more effectively suppress the decrease in water dispersion stability of the block polyisocyanate composition and the decrease in low-temperature curability of the obtained resin film.

For the reaction between the hydrophilic compound-modified polyisocyanate and the blocking agent, the method described as the blocking reaction can be used.

<Characteristics of blocked polyisocyanate composition>

[Weight-average molecular weight Mw]

The weight-average molecular weight Mw of the blocked polyisocyanate composition of the present embodiment is preferably $2.0\times10^3$ or more, more preferably $2.0\times10^3$ or more and $2.0\times10^5$ or less, even more preferably $4.0\times10^3$ or more and $1.5\times10^5$ or less, particularly preferably $4.0\times10^3$ or more and $1.0\times10^5$ or less, and most preferably $4.0\times10^3$ or more and $7.0\times10^4$ or less. When the weight-average molecular weight Mw is within the above range, the viscosity of the blocked polyisocyanate composition can be kept better. The weight-average molecular weight Mw can be measured by, for example, gel permeation chromatography (hereinafter sometimes abbreviated as "GPC").

<<Resin composition>>

The resin composition of the present embodiment contains the above-mentioned blocked polyisocyanate composition and a polyhydric hydroxy compound. The resin composition of the present embodiment can also be formed as a one-pack type resin composition containing a curing agent component and a main component.

The resin composition of the present embodiment provides a resin film having excellent storage stability and low-temperature curability.

The constituent components of the resin composition of the present embodiment will be described in detail below.

<Polyhydric hydroxy compound>

In the present specification, the "polyhydric hydroxy compound" means a compound having at least two hydroxyl groups in one molecule and is also called "polyol".

The polyhydric hydroxy compound is selected from aliphatic hydrocarbon polyols, polyether polyols, polyester polyols, epoxy resins, fluorine-containing polyols and acrylic polyols.

Among the examples, the polyhydric hydroxy compound is preferably a polyester polyol, fluorine-containing polyol or an acrylic polyol.

[Aliphatic hydrocarbon polyols]

Examples of the aliphatic hydrocarbon polyols include a terminally hydroxylated polybutadiene and hydrogenated product thereof.

[Polyether polyols]

Examples of the polyether polyols include those obtained by using any one of the following methods (1) to (3).

(1) Polyether polyols or polytetramethylene glycols obtained by adding a single alkylene oxide or a mixture of alkylene oxides to a single polyhydric alcohol or a mixture of polyhydric alcohols.
(2) Polyether polyols obtained by reacting a polyfunctional compound with an alkylene oxide.
(3) So-called polymer polyols obtained by polymerizing an acrylamide or the like using the polyether polyols obtained in (1) or (2) as a medium.

Examples of the polyhydric alcohol include a glycerin, and propylene glycol.
Examples of the alkylene oxide include an ethylene oxide, and propylene oxide.
Examples of the polyfunctional compound include an ethylenediamine, and ethanolamines.

[Polyester polyols]

Examples of the polyester polyols include the following polyester polyols (1) or (2).

(1) Polyester polyol resins obtained by condensation reaction of a single dibasic acid or a mixture of two or more dibasic acids with a single polyhydric alcohol or a mixture of two or more polyhydric alcohols.
(2) Polycaprolactones obtained by ring-opening polymerization of a ε-caprolactone with a polyhydric alcohol.

Examples of the dibasic acid include a carboxylic acid such as succinic acid, adipic acid, dimer acid, maleic anhydride, phthalic anhydride, isophthalic acid, terephthalic acid, and 1,4-cyclohexanedicarboxylic acid.
Examples of the polyhydric alcohol include an ethylene glycol, propylene glycol, diethylene glycol, 1,4-butanediol, neopentyl glycol, 1,6-hexanediol, trimethylpentanediol, cyclohexanediol, trimethylolpropane, glycerin, pentaerythritol, 2-methylolpropanediol, and ethoxylated trimethylolpropane.

[Epoxy resins]

Examples of the epoxy resins include epoxy resins such as a novolac type epoxy resin, β-methyl epichloro type epoxy resin, cyclic oxirane type epoxy resin, glycidyl ether type epoxy resin, glycol ether type epoxy resin, epoxy type unsaturated aliphatic compound, epoxidized fatty acid ester, ester type polycarboxylic acid, aminoglycidyl type epoxy resin, halogenated epoxy resin, resorcin type epoxy resin, resins obtained by modifying these epoxy resins with amino compounds, polyamide compounds.

[Fluorine-containing polyols]

Examples of the fluorine-containing polyols include a copolymer of a fluoroolefin, cyclohexyl vinyl ether, hydroxyalkyl vinyl ether, monocarboxylic acid vinyl ester disclosed in Reference Document 1 (Japanese Unexamined Patent Application, First Publication No. S57-34107) and Reference Document 2 (Japanese Unexamined Patent Application, First Publication No. S61-275311),.

[Acrylic polyols]

The acrylic polyols can be obtained, for example, by polymerizing a polymerizable monomer having one or more active hydrogens in one molecule, or by copolymerizing a polymerizable monomer having one or more active hydrogens in one molecule and, if necessary, other monomers copolymerizable with the polymerizable monomer.
Examples of the polymerizable monomer having one or more active hydrogens in one molecule include those shown in (i) to (iii) below. These may be used alone or in combination of two or more.

(i) Acrylic acid esters having an active hydrogen, such as a 2-hydroxyethyl acrylate, 2-hydroxypropyl acrylate, 2-hydroxybutyl acrylate.

(ii) Methacrylic acid esters having an active hydrogen, such as a 2-hydroxyethyl methacrylate, 2-hydroxypropyl methacrylate, 2-hydroxybutyl methacrylate.

(iii) (Meth)acrylic acid esters having a polyvalent active hydrogen, such as an acrylic acid monoester or methacrylic

acid monoester of glycerin, acrylic acid monoester or methacrylic acid monoester of trimethylolpropane.

Examples of said other monomers copolymerizable with the polymerizable monomer include those shown in (i) to (v) below. These may be used alone or in combination of two or more.

(i) Acrylic acid esters such as a methyl acrylate, ethyl acrylate, isopropyl acrylate, -n-butyl acrylate, 2-ethylhexyl acrylate.
(ii) Methacrylic acid esters such as a methyl methacrylate, ethyl methacrylate, isopropyl methacrylate, n-butyl methacrylate, isobutyl methacrylate, methacrylic acid-n-hexyl, cyclohexyl methacrylate, lauryl methacrylate, glycidyl methacrylate.
(iii) Unsaturated carboxylic acids such as an acrylic acid, methacrylic acid, maleic acid, itaconic acid.
(iv) Unsaturated amides such as an acrylamide, N-methylol acrylamide, diacetone acrylamide.
(v) Styrene, vinyltoluene, vinyl acetate, and acrylonitrile.

Further, acrylic polyols obtained by copolymerizing the polymerizable UV-stable monomers disclosed in Reference Document 3 (Japanese Unexamined Patent Application No. H1-261409) and Reference Document 4 (Japanese Unexamined Patent Application No. H3-006273), may also be exemplified

Specific examples of the polymerizable UV-stable monomer include a 4-(meth)acryloyloxy-2,2,6,6-tetramethylpiperidine, 4-(meth)acryloylamino-2,2,6,6-tetramethylpiperidine, 1-crotonoyl-4-crotonoyloxy-2,2,6,6-tetramethylpiperidine, 2-hydroxy-4-(3-methacryloxy-2-hydroxypropoxy)benzophenone.

The acrylic polyol can be obtained, for example, by solution-polymerizing the above-mentioned monomer component in the presence of a radical polymerization initiator such as a known peroxide, azo compound and if necessary, diluting with an organic solvent.

In the case of obtaining a water-based acrylic polyol, it can be produced by a method of solution-polymerizing an olefinically unsaturated compound and converting it into an aqueous layer, or a known method such as emulsion polymerization. In that case, water solubility or water dispersibility can be imparted by neutralizing the acidic moieties of the carboxylic acid-containing monomers such as acrylic acid, methacrylic acid and the acidic moieties of the sulfonic acid-containing monomers with amines and ammonia.

[Hydroxyl value and acid value of polyhydric hydroxy compound]

The hydroxyl value of the polyhydric hydroxy compound contained in the resin composition of the present embodiment is preferably 5 mgKOH/g or more and 300 mgKOH/g or less.

When the hydroxyl group of the polyhydric hydroxy compound is at least the above lower limit, the crosslink density of urethane due to the reaction with polyisocyanate is further increased, and the function of a urethane bond is more easily exhibited. On the other hand, when the hydroxyl group of the polyhydric hydroxy compound is at most the above upper limit, the crosslink density does not increase excessively and the mechanical properties of the resin film can be improved.

[NCO/OH]

The molar equivalent ratio (NCO/OH) of the isocyanate group of the blocked polyisocyanate composition to the hydroxyl group of the polyhydric hydroxy compound contained in the resin composition of the present embodiment is determined by the required physical properties of the resin film, and is generally 0.01 or more and 22.5 or less.

<Other additives>

The resin composition of the present embodiment may further contain other additives.

Examples of said other additives include curing agents capable of reacting with the crosslinkable functional group in the polyhydric hydroxy compound, curing catalysts, solvents, pigments (extender pigments, coloring pigments, metallic pigments,), ultraviolet absorbers, light stabilizers, radical stabilizers, anti-yellowing agents that suppress coloration during a baking step, coating surface adjusters, flow adjusters, pigment dispersants, anti-foaming agents, thickeners, and film-forming auxiliaries.

Examples of the curing agent include a melamine resin, urea resin, epoxy group-containing compound or resin, carboxyl group-containing compound or resin, acid anhydride, alkoxysilane group-containing compound or resin, and hydrazide compound.

The curing catalyst may be a basic compound or a Lewis acidic compound.

Examples of the basic compound include metal hydroxides, metal alkoxides, metal carboxylates, metal acetyl

acetylates, hydroxides of onium salts, onium carboxylates, halides of onium salts, and metal salts of active methylene compounds, onium salts of active methylene compounds, aminosilanes, amines, and phosphines. The onium salt is preferably an ammonium salt, a phosphonium salt or a sulfonium salt.

Examples of the Lewis acidic compound include organic tin compounds, organic zinc compounds, organic titanium compounds, and organic zirconium compounds.

Examples of the solvent include the same as those exemplified in the above-mentioned blocked polyisocyanate composition.

In addition, as the pigments (extender pigments, coloring pigments, metallic pigments, etc.), ultraviolet absorbers, light stabilizers, radical stabilizers, anti-yellowing agents that suppress coloration during a baking process, coating surface adjusters, flow adjusters, pigment dispersants, anti-foaming agents, thickeners and the film-forming auxiliaries, known ones can be appropriately selected and used.

<Method for producing resin composition>

Although the resin composition of the present embodiment can be used for both a solvent-based and water-based composition, since a resin composition that is water-based and has good storage stability has not been known so far, it is preferable to use as a water-based resin composition.

In the case where a water-based resin composition (aqueous resin composition) is produced, first, additives such as a curing agent capable of reacting with the crosslinkable functional group in the polyhydric hydroxy compound, a curing catalyst, a solvent, a pigment (extender pigment, coloring pigment, metallic pigment), an ultraviolet absorber, a light stabilizer, a radical stabilizer, an anti-yellowing agent that suppresses coloration during baking step, a coating surface adjuster, a flow adjuster, a pigment dispersant, an anti-foaming agent, a thickener, a film-forming auxiliary are added to the polyhydric hydroxy compound, or a water dispersion or aqueous solution thereof according to need. Then, the blocked polyisocyanate composition or water dispersion thereof is added as a curing agent, and if necessary, water or a solvent is further added thereto to adjust the viscosity. Next, by forcibly stirring with a stirrer, a water-based resin composition (aqueous resin composition) can be obtained.

In the case where a solvent-based resin composition is produced, first, additives such as a curing agent capable of reacting with the crosslinkable functional group in the polyhydric hydroxy compound, a curing catalyst, a solvent, a pigment (extender pigment, coloring pigment, metallic pigment or the like), an ultraviolet absorber, a light stabilizer, a radical stabilizer, an anti-yellowing agent that suppresses coloration during baking step, a coating surface adjuster, a flow adjuster, a pigment dispersant, an anti-foaming agent, a thickener, a film-forming auxiliary and the like are added to the polyhydric hydroxy compound or a solvent-dilution thereof. Then, the blocked polyisocyanate composition is added as a curing agent, and if necessary, a solvent is further added to adjust the viscosity. Then, by performing stirring manually or using a stirring device such as a Mazelar, a solvent-based resin composition can be obtained.

<<Resin film>>

The resin film of the present embodiment is obtained by curing the above-described resin composition. The resin film of the present embodiment has good low-temperature curability.

The resin film of the present embodiment can be obtained by coating the above-described resin composition on a substrate by a known method such as roll coating, curtain flow coating, spray coating, bell coating, electrostatic coating and curing by heating.

From the viewpoint of energy saving and heat resistance of the substrate, the heating temperature is preferably about 70°C or higher and about 120°C or lower, more preferably about 70°C or higher and about 110°C or lower, and even more preferably about 75°C or higher and about 100°C or lower.

The heating time is preferably about 1 minute or more and about 60 minutes or less, and more preferably about 2 minutes or more and about 40 minutes or less from the viewpoint of energy saving and heat resistance of the substrate.

The substrate is not particularly limited, and examples thereof include outer panels of automobile bodies such as passenger cars, trucks, motorcycles, buses; automobile parts such as bumpers; outer panels of home electric appliances such as mobile phones, audio equipment, various films and among the examples, outer panels of automobile bodies or automobile parts are preferable.

The material of the substrate is not particularly limited, and examples thereof include metal materials such as iron, aluminum, brass, copper, tin plate, stainless steel, galvanized steel, zinc alloy (Zn-Al, Zn-Ni, Zn-Fe, etc.) plated steel; resins such as polyethylene resin, polypropylene resin, acrylonitrile-butadiene-styrene (ABS) resin, polyamide resin, acrylic resin, vinylidene chloride resin, polycarbonate resin, polyurethane resin, epoxy resin and various plastic materials such as FRP, inorganic materials such as glass, cement, concrete; wood; textile materials such as paper, cloth and among the examples, metal materials or plastic materials are preferable.

The substrate may be a substrate in which a surface treatment such as a phosphate treatment, a chromate

treatment, a complex oxide treatment is performed on a surface of a metal material or a metal surface of a vehicle body molded from the metal material, and may also be a substrate on which a coating film is formed. The substrate on which a coating film is formed may be a substrate on which a surface treatment is performed as necessary, and an undercoat coating film is formed thereon, for example, a vehicle body with an undercoat coating film formed by electrodeposition coating material. The substrate may be a surface of the above-described plastic material or a plastic surface of an automobile part molded from the above-described metal material, which has been subjected to a desired surface treatment. Further, the substrate may be a combination of a plastic material and a metal material.

The gel fraction of the resin film of the present embodiment is preferably 82% by mass or more, more preferably 85% by mass or more, and even more preferably 86% by mass or more, when measuring a resin film having a thickness of 40 μm, which is obtained by heating and curing the resin composition at 80°C for 30 min, followed by storing at 23°C for one week, then immersing in an acetone at 23°C for 24 hours as shown in the Examples described later. When the gel fraction is at least the above lower limit, the low-temperature curability can be improved. On the other hand, although the upper limit of the gel fraction is not particularly limited, it may be 100% by mass. As a specific method for measuring the gel fraction, for example, the method shown in the Examples described later can be used.

The König hardness at 23°C of the resin film of the present embodiment is preferably 38 times or more, more preferably 40 times or more, even more preferably 50 times or more, and particularly preferably 55 times or more, when measuring a resin film having a thickness of 40 μm, which is obtained by heating and curing the resin composition on a glass at 80°C for 30 min as shown in the Examples described later. When the König hardness at 23°C is at least the above lower limit, a resin film having better hardness can be obtained. On the other hand, although the upper limit of the König hardness at 23°C is not particularly limited, for example, it may be 140 times. As a specific method for measuring the König hardness at 23°C, for example, the method shown in the Examples described later can be used.

The maximum tensile stress in a tensile test carried out at 23°C and a speed of 20 mm/min of the resin film of the present embodiment is preferably 5 MPa or more, more preferably 10 MPa or more, even more preferably 15 MPa or more, and particularly preferably 20 MPa or more, when measuring a resin film having a thickness of 40 μm, a width of 10 mm and a length of 40 mm, which is obtained by heating and curing the resin composition at 80°C for 30 min, and set so that a distance between glippers is 20mm as shown in the Examples described later. When the maximum tensile stress is at least the above lower limit, a resin film having improved strength can be obtained. On the other hand, although the upper limit of the maximum tensile stress is not particularly limited, for example, it may be 100 MPa. As a specific method for measuring the maximum tensile stress, for example, the method shown in the Examples described later can be used.

Since the resin film of the present embodiment has excellent low-temperature curability, it is suitably used as a product in various fields requiring energy saving and as a coating film of a material having low heat resistance.

<<Laminate>>

The laminate of the present embodiment includes two or more layers of the above resin films having different compositions. The thickness of each layer of the resin film is 1 μm or more and 50 μm or less. The laminate of the present embodiment has excellent low-temperature curability by including the resin film.

The laminate of the present embodiment can also include two or more layers of the resin film having the same composition.

Further, the laminate of the present embodiment is formed by laminating various coating films including a resin film on an adherend.

Examples of the adherend include glass, various metals, porous members, various coated members, cured sealing materials, rubbers, leathers, fibers, non-woven fabrics, films and plates of resins, ultraviolet-curing type acrylic resin layers and layers composed of inks. Examples of the various metals include aluminum, iron, zinc steel plate, copper, stainless steel. Examples of the porous member include wood, paper, mortar, stone and the like. Examples of the various coatings include fluorine coating, urethane coating, acrylic urethane coating. Examples of the cured sealing material include silicone-based, modified silicone-based, and urethanebased materials. Examples of the rubbers include natural rubber and synthetic rubber. Examples of the leathers include natural leather and artificial leather. Examples of the fibers include plant fibers, animal fibers, carbon fibers, glass fibers. Examples of the resins used as a raw material for the films and plates of the resins include a polyvinyl chloride, polyester, acryl, polycarbonate, triacetyl cellulose, polyolefin. Examples of the inks include a printing ink, and UV ink.

The laminate of the present embodiment can be obtained by coating the adherends separately with the above-mentioned resin compositions having different compositions by a known method such as roll coating, curtain flow coating, spray coating, bell coating, electrostatic coating and heating and curing them separately, or heating and curing all layers together after coating.

The laminate of the present embodiment may include, in addition to the above resin film, a layer composed of other known components such as a primer layer, an adhesive layer, and a decorative layer.

[EXAMPLES]

Hereinafter, the present embodiment will be described in more detail based on the Examples and Comparative Examples, but the present embodiment is not limited to the following examples.

<Test items>

With respect to the blocked polyisocyanate compositions obtained in the Examples and Comparative Examples, physical properties were measured and evaluations were performed according to the methods described below.

[Physical property 1]

(Isocyanate group (NCO) content)

In order to measure the NCO content of the polyisocyanate, polyisocyanate before blocking with a blocking agent was used as a measurement sample.

First, 2 g or more and 3 g or less of a measurement sample was precisely weighed in a flask (Wg). Then, 20 mL of toluene was added to dissolve the measurement sample. Then, 20 mL of a 2N di-n-butylamine toluene solution was added, and after mixing, the mixture was allowed to stand at room temperature for 15 minutes. Then, 70 mL of isopropyl alcohol was added and mixed. Then, this solution was titrated with a 1N hydrochloric acid solution (factor F) as an indicator. The titration value obtained was represented as V2 mL. The titration value obtained without the polyisocyanate sample was represented as V1 mL. Then, the isocyanate group (NCO) content (mass%) of the polyisocyanate was calculated from the following formula.

$$\text{Isocyanate group (NCO) content (mass\%)} = (V1\text{-}V2) \times F \times 42/(W \times 1000) \text{ x } 100$$

[Physical property 2]

(Number-average molecular weight and weight-average molecular weight)

The number-average molecular weight and the weight-average molecular weight are the polystyrene standard number-average molecular weight and weight-average molecular weight measured by gel permeation chromatography (GPC) using the following apparatus. In order to measure the number-average molecular weight of polyisocyanate, polyisocyanate before blocking with a blocking agent was used as a measurement sample. Regarding the weight-average molecular weight, the blocked polyisocyanate composition was used as it was as a measurement sample. The measurement conditions are shown below.

(Measurement condition)

Equipment: HLC-802A, manufactured by Tosoh Corp.
Column: G1000HXI, × 1, G2000HXI, × 1, G3000HXI, × 1, manufactured by Tosoh Corp.
Carrier: Tetrahydrofuran
Detection method: Differential refractometer

[Physical property 3]

(Average number of isocyanate functional groups)

The average number of isocyanate functional groups (average NCO number) of polyisocyanate was calculated by the following formula. In the formula, "Mn" is the number-average molecular weight of the polyisocyanate before blocking with a blocking agent, and the value measured in "Physical property 2" above was used. The "NCO content" is the isocyanate group content of the polyisocyanate measured before blocking with a blocking agent, and the value calculated in the above "physical property 1" was used.

$$\text{Average number of isocyanate functional groups} = (\text{Mn} \times \text{NCO content} \times 0.01)/42$$

[Physical property 4]

(Solid content of blocked polyisocyanate composition)

The solid content of the blocked polyisocyanate composition was determined as follows.

First, an aluminum dish having a bottom diameter of 38 mm was precisely weighed. Then, about 1 g of the blocked polyisocyanate composition produced in each of the Examples and Comparative Examples was placed on the aluminum dish and precisely weighed (W1). Next, the blocked polyisocyanate composition was adjusted to have a uniform thickness. Then, the blocked polyisocyanate composition placed on the aluminum dish was held in an oven at 105°C for 1 hour. Then, the blocked polyisocyanate composition remaining in the aluminum dish was precisely weighed (W2) after the aluminum dish reached room temperature. Then, the solid content (mass%) of the blocked polyisocyanate composition was calculated from the following formula.

$$\text{Solid content (mass\%) of blocked polyisocyanate composition} = \text{W2/W1} \times 100$$

[Physical property 5]

(Molar ratio of constitutional unit (II)/constitutional unit (I))

The molar ratio of constitutional unit (II) to constitutional unit (I) (molar ratio of (II)/(I)) was defined such that the solvent and other components of the blocked polyisocyanate composition were removed by an evaporator at 50°C or lower and dried under reduced pressure, followed by measuring the composition ratio of constitutional unit (II) to constitutional unit (I) by $^{1}$H-NMR and $^{13}$C-NMR to calculate the molar ratio of constitutional unit (II) to constitutional unit (I).

[Preparation of resin composition]

Acrylic polyol (trade name: "Setalux1152", manufactured by Allnex Co., OH% (on solids) = 4.2, acid value (mgKOH/g) = 4.8, solid content = 61% by mass) and each of the blocked polyisocyanate compositions was blended so that the ratio of the molar amount of isocyanate group to the molar amount of hydroxyl group (isocyanate group/hydroxyl group) was 1, and then butyl acetate was further blended so that the solid content was 33% by mass to obtain a resin composition.

[Evaluation 1]

(Storage stability)

Initial viscosity and viscosity when stored in a 20 mL glass bottle at 23°C for 24 hours were measured (viscosimeter: RE-85R manufactured by Toki Sangyo Co., Ltd.) for 20 g of the obtained resin composition. The ratio of the viscosity after storage to the initial viscosity was calculated. If the ratio of the viscosity after storage to the initial viscosity was 5.0 or less and no gelation or precipitation was observed, it was evaluated as good, and the difference in the good level was represented by the following evaluation criteria.

(Evaluation criteria)

◎: Very good (ratio of viscosity after storage to initial viscosity was 2.0 or less)
oo: Good (ratio of viscosity after storage to initial viscosity was more than 2.0 and 3.0 or less)
◦: Generally good (ratio of viscosity after storage to initial viscosity was more than 3.0 and 5.0 or less)

[Evaluation 2]

(Low-temperature curability)

The obtained resin composition was coated on a polypropylene (PP) plate so as to have a dry film thickness of 40 μm, and then dried by heating at 80°C for 30 minutes to obtain a resin film. The obtained resin film was stored at room temperature (23°C) for 1 week, and the gel fraction was measured. The gel fraction was defined as the percentage value (mass%) obtained by dividing the mass of the undissolved part after immersing the resin film in acetone at 23°C for 24 hours by the mass before immersion. Those having a gel fraction of 82% by mass or more were evaluated as good.

[Evaluation 3]

(König hardness)

A resin film was obtained on a glass plate by using the same method as in "Evaluation 2". The König hardness (times) of the obtained resin film was measured at 23°C by using a König hardness meter (Pendulum hardness tester manufactured by BYK Gardner). Those having a König hardness of 38 times or more were evaluated as good.

[Evaluation 4]

(Maximum tensile stress)

The obtained resin composition was coated on a polypropylene (PP) plate so as to have a dry film thickness of 40 μm, and then dried by heating at 80°C for 30 minutes to obtain a resin film. The obtained resin film was cut into a width of 10 mm and a length of 40 mm, set so that the distance between the glippers was 20 mm, and a tensile test was carried out at a speed of 20 mm/min and at a temperature of 23° C. The maximum point stress at that time was defined as the maximum tensile stress. Those having a maximum tensile stress of 5 MPa or more were evaluated as good.

<Synthesis of polyisocyanate>

[Synthesis example 1]

(Synthesis of polyisocyanate P-1)

A four-necked flask equipped with a thermometer, a stirring blade and a reflux condenser was charged with 100 parts by mass of HDI and 5.2 parts by mass of a polyester polyol derived from a trihydric alcohol and ε-caprolactone (trade name: "Placcel 303", manufactured by Daicel Chemical Industries, Ltd., average number of hydroxyl functional groups: 3, number-average molecular weight: 300) under a nitrogen stream, and the temperature inside the reactor was kept at 88°C for 1 hour while stirring to carry out the urethane-formation reaction. Thereafter, the temperature inside the reactor was maintained at 62°C, and an isocyanurate-formation catalyst of capric acid tetramethylammonium was added, and when the yield reached 51% by mass, phosphoric acid was added to stop the reaction. After filtering the reaction solution, the unreacted HDI was removed using a thin film evaporator to obtain an isocyanurate type polyisocyanate (hereinafter, sometimes referred to as "polyisocyanate P-1"). The polyisocyanate P-1 obtained had an NCO content of 18.8% by mass, a number-average molecular weight of 1,180 and an average number of isocyanate groups of 5.3. Further, the obtained polyisocyanate P-1 was subjected to $^1$H-NMR analysis, and it was confirmed that an isocyanurate group was present.

[Synthesis example 2]

(Synthesis of polyisocyanate P-2)

A four-necked flask equipped with a thermometer, a stirring blade and a reflux condenser was charged with 80 parts by mass of HDI, 20 parts by mass of IPDI and 5.2 parts by mass of a polyester polyol derived from a trihydric alcohol and ε-caprolactone (trade name: "Placcel 303", manufactured by Daicel Chemical Industries, Ltd., average number of hydroxyl functional groups: 3, number-average molecular weight: 300) under a nitrogen stream, and the temperature inside the reactor was kept at 88°C for 1 hour while stirring to carry out the urethane-formation reaction. Thereafter, the temperature inside the reactor was maintained at 62°C, and an isocyanurate-formation catalyst of capric acid tetramethylammonium was added, and when the yield reached 51% by mass, phosphoric acid was added to stop

the reaction. After filtering the reaction solution, the unreacted HDI and IPDI were removed using a thin film evaporator to obtain an isocyanurate type polyisocyanate (hereinafter, sometimes referred to as "polyisocyanate P-2"). The polyisocyanate P-2 obtained had an NCO content of 18.0% by mass, a number-average molecular weight of 1,200 and an average number of isocyanate groups of 5.1. Further, the obtained polyisocyanate P-2 was subjected to $^1$H-NMR analysis, and it was confirmed that an isocyanurate group was present.

[Synthesis example 3]

(Synthesis of polyisocyanate P-3)

A four-necked flask equipped with a thermometer, a stirring blade and a reflux condenser was charged with 70 parts by mass of HDI, 30 parts by mass of IPDI and 3.2 parts by mass of trimethylolpropane (average number of hydroxyl functional groups: 3, molecular weight: 134) as a trihydric alcohol under a nitrogen stream, and the temperature inside the reactor was kept at 85°C for 1 hour while stirring to carry out the urethane-formation reaction. Thereafter, the temperature inside the reactor was maintained at 78°C, and 0.012 parts by mass of an isocyanurate-formation catalyst of capric acid tetramethylammonium was added, and when the yield reached 45% by mass, phosphoric acid was added to stop the reaction. After filtering the reaction solution, the unreacted HDI and IPDI were removed using a thin film evaporator to obtain an isocyanurate type polyisocyanate (hereinafter, sometimes referred to as "polyisocyanate P-3"). The polyisocyanate P-3 obtained had an NCO content of 18.9% by mass, a number-average molecular weight of 1,200 and an average number of isocyanate groups of 5.4. Further, the obtained polyisocyanate P-3 was subjected to $^1$H-NMR analysis, and it was confirmed that an isocyanurate group was present.

[Synthesis example 4]

(Synthesis of polyisocyanate P-4)

A four-necked flask equipped with a thermometer, a stirring blade and a reflux condenser was charged with 70 parts by mass of HDI, 30 parts by mass of IPDI and 2.6 parts by mass of trimethylolpropane (average number of hydroxyl functional groups: 3, molecular weight: 134) as a trihydric alcohol under a nitrogen stream, and the temperature inside the reactor was kept at 91°C for 1 hour while stirring to carry out the urethane-formation reaction. Thereafter, the temperature inside the reactor was maintained at 77°C, and 0.012 parts by mass of an isocyanurate-formation catalyst of capric acid tetramethylammonium was added, and when the yield reached 45% by mass, phosphoric acid was added to stop the reaction. After filtering the reaction solution, the unreacted HDI and IPDI were removed using a thin film evaporator to obtain an isocyanurate type polyisocyanate (hereinafter, sometimes referred to as "polyisocyanate P-4"). The polyisocyanate P-4 obtained had an NCO content of 19.1% by mass, a number-average molecular weight of 1,070 and an average number of isocyanate groups of 4.9. Further, the obtained polyisocyanate P-4 was subjected to $^1$H-NMR analysis, and it was confirmed that an isocyanurate group was present.

[Synthesis example 5]

(Synthesis of polyisocyanate P-5)

A four-necked flask equipped with a thermometer, a stirring blade and a reflux condenser was charged with 69 parts by mass of HDI, 31 parts by mass of IPDI and 2.56 parts by mass of trimethylolpropane (average number of hydroxyl functional groups: 3, molecular weight: 134) as a trihydric alcohol under a nitrogen stream, and the temperature inside the reactor was kept at 91°C for 1 hour while stirring to carry out the urethane-formation reaction. Thereafter, the temperature inside the reactor was maintained at 78°C, and 0.0124 parts by mass of an isocyanurate-formation catalyst of capric acid tetramethylammonium was added, and when the yield reached 45% by mass, phosphoric acid was added to stop the reaction. After filtering the reaction solution, the unreacted HDI and IPDI were removed using a thin film evaporator to obtain an isocyanurate type polyisocyanate (hereinafter, sometimes referred to as "polyisocyanate P-5"). The polyisocyanate P-5 obtained had an NCO content of 18.3% by mass, a number-average molecular weight of 1,420 and an average number of isocyanate groups of 6.2. Further, the obtained polyisocyanate P-5 was subjected to $^1$H-NMR analysis, and it was confirmed that an isocyanurate group was present.

[Synthesis example 6]

(Synthesis of Polyisocyanate P-6)

A four-necked flask equipped with a thermometer, a stirring blade and a reflux condenser was charged with 80 parts by mass of HDI, 20 parts by mass of IPDI and 3.5 parts by mass of trimethylolpropane (average number of hydroxyl functional groups: 3, molecular weight: 134) as a trihydric alcohol under a nitrogen stream, and the temperature inside the reactor was kept at 92°C for 1 hour while stirring to carry out the urethane-formation reaction. Thereafter, the temperature inside the reactor was maintained at 77°C, and 0.012 parts by mass of an isocyanurate-formation catalyst of capric acid tetramethylammonium was added, and when the yield reached 45% by mass, phosphoric acid was added to stop the reaction. After filtering the reaction solution, the unreacted HDI and IPDI were removed using a thin film evaporator to obtain an isocyanurate type polyisocyanate (hereinafter, sometimes referred to as "polyisocyanate P-6"). The polyisocyanate P-6 obtained had an NCO content of 19.0% by mass, a number-average molecular weight of 1,240 and an average number of isocyanate groups of 5.6. Further, the obtained polyisocyanate P-6 was subjected to $^1$H-NMR analysis, and it was confirmed that an isocyanurate group was present.

[Synthesis example 7]

(Synthesis of polyisocyanate P-7)

In a four-necked flask equipped with a thermometer, a stirring blade and a reflux condenser, 100 parts by mass of the polyisocyanate P-1, 0.5 mol% of methoxypolyethylene glycol (MPG-081, ethylene oxide repeating unit: 15 units, manufactured by Nippon Emulsifier Co., Ltd.) with respect to 100 mol% of the isocyanate groups of the polyisocyanate P-1, 0.08 parts by mass of 2-ethylhexyl acid phosphate (JP-508T, manufactured by Johoku Chemical Industry Co., Ltd.) and dipropylene glycol dimethyl ether (DPDM) were mixed and stirred at 120°C for 2 hours, thereby obtaining the polyisocyanate P-7.

[Synthesis example 8]

(Synthesis of polyisocyanate P-8)

In a four-necked flask equipped with a thermometer, a stirring blade and a reflux condenser, 100 parts by mass of the polyisocyanate P-4, 0.5 mol% of methoxypolyethylene glycol (MPG-081, ethylene oxide repeating unit: 15 units, manufactured by Nippon Emulsifier Co., Ltd.) with respect to 100 mol% of the isocyanate groups of the polyisocyanate P-4, 0.08 parts by mass of 2-ethylhexyl acid phosphate (JP-508T, manufactured by Johoku Chemical Industry Co., Ltd.) and dipropylene glycol dimethyl ether (DPDM) were mixed and stirred at 120°C for 2 hours, thereby obtaining the polyisocyanate P-8.

[Synthesis example 9]

(Synthesis of Polyisocyanate P-9)

In a four-necked flask equipped with a thermometer, a stirring blade and a reflux condenser, 100 parts by mass of the polyisocyanate P-1, 6.0 parts by mass (2.0 mol% with respect to 100 mol% of the isocyanate group of the polyisocyanate P-1) of methoxypolyethylene glycol (MPG-081, ethylene oxide repeating unit: 15 units, manufactured by Nippon Emulsifier Co., Ltd.), 0.08 parts by mass of 2-ethylhexyl acid phosphate (JP-508T, manufactured by Johoku Chemical Industry Co., Ltd.) and dipropylene glycol dimethyl ether (DPDM) were mixed and stirred at 120°C for 2 hours, thereby obtaining the polyisocyanate P-9.

<Preparation of blocked polyisocyanate composition>

[Example 1]

(Preparation of blocked polyisocyanate composition BL-a1)

A four-necked flask equipped with a thermometer, a stirring blade and a reflux condenser was charged with 100 parts by mass of the polyisocyanate P-1 obtained in Synthesis Example 1, 6.8 parts by mass (20 mol% with respect to 100 mol% of NCO group) of diisopropyl malonate, and 74.9 parts by mass (80 mol% with respect to 100 mol% of

NCO group) of di-tert-butyl malonate under a nitrogen stream, and further added with dipropylene glycol dimethyl ether (DPDM) so as to have a solid content of 60% by mass. Next, while stirring, 1.0 parts by mass of sodium methylate (28% by mass with respect to total mass of the solution)-containing methanol solution was added dropwise, and then the outer bath was adjusted so that the solution temperature was 55°C to carry out a blocking reaction at 55°C for 5 hours, thereby obtaining the blocked polyisocyanate composition BL-a1. The obtained blocked polyisocyanate composition BL-a1 had a solid content of 60.1% by mass and a weight-average molecular weight of $5.39 \times 10^3$.

[Examples 2 to 10 and Comparative Examples 1 to 3]

(Preparation of blocked polyisocyanate compositions BL-a2 to BL-a10 and BL-b1 to BL-b3)

The block polyisocyanate compositions BL-a2 to BL-a10 and BL-b1 to BL-b3 were prepared in the same manner as in the Example 1 except that the blocking agents and the blending ratios shown in Tables 1 to 3 were used.

[Example 11]

(Blocked polyisocyanate composition BL-a11)

A four-necked flask equipped with a thermometer, a stirring blade and a reflux condenser was charged with 100 parts by mass of the polyisocyanate P-3 obtained in Synthesis Example 3, 60 mol% of diisopropyl malonate with respect to 100 mol% of NCO group, and 40 mol% of di-tert-butyl malonate with respect to 100 mol% of NCO group under a nitrogen stream, and further added with dipropylene glycol dimethyl ether (DPDM) so as to have a solid content of 60% by mass. Next, while stirring, 1.2 parts by mass of sodium methylate (28% by mass with respect to total mass of the solution)-containing methanol solution was added dropwise, and then the outer bath was adjusted so that the solution temperature was 55°C to carry out a blocking reaction at 53°C for 8 hours or more, thereby obtaining the blocked polyisocyanate composition BL-a11. The obtained blocked polyisocyanate composition BL-a11 had a solid content of 60.1% by mass and a weight-average molecular weight of $7.94 \times 10^3$.

[Examples 12 to 23]

(Blocked polyisocyanate compositions BL-a12 to BL-a23)

Blocked polyisocyanate compositions BL-a12 to BL-a23 were prepared in the same manner as in Example 11 except that the polyisocyanates, blocking agents, and the blending ratios shown in Tables 4 to 6 were used.

[Example 24]

(Blocked polyisocyanate composition BL-a24)

A four-necked flask equipped with a thermometer, a stirring blade and a reflux condenser was charged with 100 parts by mass of the polyisocyanate P-1 obtained in Synthesis Example 1, 80 mol% of diisopropyl malonate with respect to 100 mol% of NCO group, and 20 mol% of di-tert-butyl malonate with respect to 100 mol% of NCO group under a nitrogen stream, and further added with dipropylene glycol dimethyl ether (DPDM) so as to have a solid content of 60% by mass. Next, while stirring, 1.0 parts by mass of sodium methylate (28% by mass with respect to total mass of the solution)-containing methanol solution was added dropwise, and then the outer bath was adjusted so that the solution temperature was 53°C to carry out a blocking reaction at 53°C for 6 hours or more, then the disappearance of the peak of the isocyanate group was confirmed by infrared spectroscopy (IR). Thereafter, 100 mol% of tert-butanol with respect to 100 mol% of the initial NCO group of the polyisocyanate P-1 (NCO group before blocking reaction) was added to carry out a reaction at 80°C for 2 hours. Thereafter, tert-butanol remaining in the reaction solution and isopropanol produced by the transesterification reaction were removed by distillation under reduced pressure, and dipropylene glycol dimethyl ether (DPDM) removed during distillation under reduced pressure was added to obtain the blocked polyisocyanate composition BL-a24. The obtained blocked polyisocyanate composition BL-a24 had a solid content of 60.2% by mass and a weight-average molecular weight of $8.31 \times 10^3$.

[Example 25]

(Blocked polyisocyanate composition BL-a25)

A four-necked flask equipped with a thermometer, a stirring blade and a reflux condenser was charged with 100 parts by mass of the polyisocyanate P-1 obtained in Synthesis Example 1 and 84.2 parts by mass (100 mol% with respect to 100 mol% of NCO group) of diisopropyl malonate under a nitrogen stream, and further added with dipropylene glycol dimethyl ether (DPDM) so as to have a solid content of 60% by mass. Next, while stirring, 1.0 parts by mass of sodium methylate (28% by mass with respect to total mass of the solution)-containing methanol solution was added dropwise, and then the outer bath was adjusted so that the solution temperature was 48°C to carry out a blocking reaction at 48°C for 6 hours or more, then the disappearance of the peak of the isocyanate group was confirmed by infrared spectroscopy (IR). Thereafter, 66.4 parts by mass (200 mol% with respect to 100 mol% of the initial NCO group of the polyisocyanate P-1) of tert-butanol was added to carry out a reaction at 80°C for 4 hours. Thereafter, tert-butanol remaining in the reaction solution and isopropanol produced by the transesterification reaction were removed by distillation under reduced pressure, and dipropylene glycol dimethyl ether (DPDM) removed during the distillation under reduced pressure was added to obtain the blocked polyisocyanate composition BL-a25. The obtained blocked polyisocyanate composition BL-a25 had a solid content of 60.1% by mass and a weight-average molecular weight of $6.83 \times 10^3$.

[Example 26]

(Blocked polyisocyanate composition BL-a26)

The blocked polyisocyanate composition BL-a26 was prepared in the same manner as in Example 1 except that the polyisocyanate, the blocking agent and the blending ratio shown in Table 6 were used.

The blocked polyisocyanate composition BL-a26 was used to prepare a resin composition by the following method.

A water-based acrylic polyol main agent (manufactured by Nuplex, trade name: "Setaqua (registered trademark) 6515", OH (%) (on solids) = 3.3, Acid value (mgKOH/g) = 9.9, solid content = 45% by mass) and the blocked polyisocyanate composition BL-a26 were blended so that the molar ratio of isocyanate group to hydroxyl group (isocyanate group/hydroxyl group) was 0.80. Further, ion-exchanged water was added, and a small amount of dimethylaminoethanol was added to adjust the pH to about 8.0 or more and 8.5 or less and the solid content to 45% by mass. Thereafter, the solution was stirred at 1000rpm for 15 minutes using a homodisper, and after defoaming, a resin composition was obtained. The low-temperature curability of the obtained resin composition was evaluated by the same method as described above.

Further, various evaluations were performed for the blocked polyisocyanate compositions obtained in the Examples and the Comparative Examples by using the above-described methods. The results are shown in Tables 1 to 6 below.

The blocking agents described in Tables 1 to 6 are as shown below.

(Blocking agent)

B-1: Diisopropyl malonate
B-2: Di-tert-butyl malonate
B-3: Diethyl malonate

[Table 1]

| | Example 1 | Example 2 | Example 3 | Example 4 |
|---|---|---|---|---|
| Blocked polyisocyanate composition | BL-a1 | BL-a2 | BL-a3 | BL-a4 |

(continued)

| | | | Example 1 | Example 2 | Example 3 | Example 4 |
|---|---|---|---|---|---|---|
| Composition | Polyisocyanate | | P-1 | P-1 | P-1 | P-1 |
| | Blocking agent | Type | B-1 | B-1 | B-1 | B-1 |
| | | | B-2 | B-2 | B-2 | B-2 |
| | | Molar ratio of (B-1)/(B-2) or (B-3)/(B-2) (blending ratio) | 20/80 | 30/70 | 40/60 | 50/50 |
| | Molar ratio of (II)/(I) | | 20/80 | 30/70 | 40/60 | 50/50 |
| Physical property | Average NCO number | | 5.3 | 5.3 | 5.3 | 5.3 |
| | Solid content (mass%) | | 60.1 | 60.2 | 60.1 | 60.3 |
| | Weight-average molecular weight Mw | | $5.39\times10^3$ | $5.43\times10^3$ | $5.48\times10^3$ | $5.55\times10^3$ |
| Evaluation | Storage stability | | ○ | ○ | ○○ | ○○ |
| | Low-temperature curability (Gel fraction: mass%) | | 87.6 | 87.7 | 87.8 | 87.6 |
| | König hardness (times) | | 69 | 69 | 69 | 69 |
| | Maximum stress (MPa) | | 25.6 | 25.8 | 25.9 | 26.1 |

[Table 2]

| | | | Example 5 | Example 6 | Example 7 | Example 8 | Example 9 | Example 10 |
|---|---|---|---|---|---|---|---|---|
| Blocked polyisocyanate composition | | | BL-a5 | BL-a6 | BL-a7 | BL-a8 | BL-a9 | BL-a10 |
| Composition | Polyisocyanate | | P-1 | P-1 | P-1 | P-1 | P-1 | P-2 |
| | Blocking agent | Type | B-1 | B-1 | B-1 | B-1 | B-1 | B-1 |
| | | | B-2 | B-2 | B-2 | B-2 | B-2 | B-2 |
| | | Molar ratio of (B-1)/(B-2) or (B-3)/(B-2) (blending ratio) | 60/40 | 70/30 | 80/20 | 90/10 | 92/8 | 80/20 |
| | Molar ratio of (II)/(I) | | 60/40 | 70/30 | 80/20 | 90/10 | 92/8 | 80/20 |
| Physical property | Average NCO number | | 5.3 | 5.3 | 5.3 | 5.3 | 5.3 | 5.1 |
| | Solid content (mass%) | | 60.2 | 60.1 | 60.3 | 60.2 | 60.1 | 60.1 |
| | Weight-average molecular weight Mw | | $5.85\times10^3$ | $6.54\times10^3$ | $7.82\times10^3$ | $8.63\times10^3$ | $8.92\times10^3$ | $1.22\times10^4$ |
| Evaluation | Storage stability | | ○○ | ◎ | ◎ | ◎ | ◎ | ◎ |
| | Low-temperature curability (Gel fraction: mass%) | | 87.7 | 87.5 | 87.2 | 86.3 | 86.0 | 86.9 |
| | König hardness (times) | | 69 | 65 | 64 | 64 | 62 | 68 |
| | Maximum stress (MPa) | | 26.0 | 25.9 | 25.8 | 25.7 | 21.9 | 28.5 |

[Table 3]

| | | | Comparative Example 1 | Comparative Example 2 | Comparative Example 3 |
|---|---|---|---|---|---|
| Blocked polyisocyanate composition | | | BL-b1 | BL-b2 | BL-b3 |
| Composition | Polyisocyanate | | P-1 | P-1 | P-1 |
| | Blocking agent | Type | B-1 | - | B-1 |
| | | | - | B-2 | B-2 |
| | | Molar ratio of (B-1)/(B-2) or (B-3)/(B-2) (blending ratio) | - | - | 5/95 |
| | Molar ratio of (II)/(I) | | - | - | 5/95 |
| Physical property | Average NCO number | | 5.3 | 5.3 | 5.3 |
| | Solid content (mass%) | | 60 | 60 | 60 |
| | Weight-average molecular weight Mw | | $6.43\times10^3$ | $5.47\times10^3$ | $5.42\times10^3$ |
| Evaluation | Storage stability | | ◎ | gelation | gelation |
| | Low-temperature curability (Gel fraction: mass%) | | 81.1 | 87.4 | 87.5 |
| | König hardness (times) | | 37 | 68 | 67 |
| | Maximum stress (MPa) | | 10.9 | 24.5 | 24.8 |

[Table 4]

| | | | Example 11 | Example 12 | Example 13 | Example 14 | Example 15 | Example 16 |
|---|---|---|---|---|---|---|---|---|
| Blocked polyisocyanate composition | | | BL-a11 | BL-a12 | BL-a13 | BL-a14 | BL-a15 | BL-a16 |
| Composition | Polyisocyanate | | P-3 | P-3 | P-3 | P-3 | P-3 | P-4 |
| | Blocking agent | Type | B-1 | B-1 | B-1 | B-1 | B-1 | B-1 |
| | | | B-2 | B-2 | B-2 | B-2 | B-2 | B-2 |
| | | Molar ratio of (B-1)/(B-2) or (B-3)/(B-2) (blending ratio) | 60/40 | 70/30 | 80/20 | 90/10 | 92/8 | 80/20 |
| | Molar ratio of (II)/(I) | | 60/40 | 70/30 | 80/20 | 90/10 | 92/8 | 80/20 |
| Physical property | Average NCO number | | 5.4 | 5.4 | 5.4 | 5.4 | 5.4 | 4.9 |
| | Solid content (mass%) | | 60.1 | 60.1 | 60.2 | 60.1 | 60.1 | 60.1 |
| | Weight-average molecular weight Mw | | $7.94\times10^3$ | $8.80\times10^3$ | $9.22\times10^3$ | $9.55\times10^3$ | $9.78\times10^3$ | $8.62\times10^3$ |

(continued)

| | | Example 11 | Example 12 | Example 13 | Example 14 | Example 15 | Example 16 |
|---|---|---|---|---|---|---|---|
| Evaluation | Storage stability | ○○ | ◎ | ◎ | ◎ | ◎ | ◎ |
| | Low-temperature curability (Gel fraction: mass%) | 87.5 | 87.2 | 86.8 | 86.0 | 85.6 | 86.5 |
| | König hardness (times) | 98 | 97 | 96 | 96 | 89 | 93 |
| | Maximum stress (MPa) | 29.2 | 29.9 | 30.5 | 30.7 | 28.2 | 29.5 |

[Table 5]

| | | | Example 17 | Example 18 | Example 19 | Example 20 |
|---|---|---|---|---|---|---|
| Blocked polyisocyanate composition | | | BL-a17 | BL-a18 | BL-a19 | BL-a20 |
| Composition | Polyisocyanate | | P-5 | P-6 | P-7 | P-8 |
| | Blocking agent | Type | B-1 | B-1 | B-1 | B-1 |
| | | | B-2 | B-2 | B-2 | B-2 |
| | | Molar ratio of (B-1)/(B-2) or (B-3)/(B-2) (blending ratio) | 80/20 | 80/20 | 70/30 | 30/70 |
| | Molar ratio of (II)/(I) | | 80/20 | 80/20 | 70/30 | 30/70 |
| Physical property | Average NCO number | | 6.2 | 5.6 | 5.3 | 4.9 |
| | Solid content (mass%) | | 60.1 | 60.1 | 60.2 | 60.1 |
| | Weight-average molecular weight Mw | | $1.08\times10^4$ | $9.42\times10^3$ | $8.52\times10^3$ | $9.22\times10^3$ |
| Evaluation | Storage stability | | ◎ | ◎ | ◎ | ◎ |
| | Low-temperature curability (Gel fraction: mass%) | | 87.5 | 87.2 | 89.2 | 88.2 |
| | König hardness (times) | | 98 | 85 | 82 | 101 |
| | Maximum stress (MPa) | | 29.2 | 28.9 | 28.1 | 31.5 |

[Table 6]

| | Example 21 | Example 22 | Example 23 | Example 24 | Example 25 | Example 26 |
|---|---|---|---|---|---|---|
| Blocked polyisocyanate composition | BL-a21 | BL-a22 | BL-a23 | BL-a24 | BL-a25 | BL-a26 |

(continued)

| | | | Example 21 | Example 22 | Example 23 | Example 24 | Example 25 | Example 26 |
|---|---|---|---|---|---|---|---|---|
| Composition | Polyisocyanate | | P-1 | P-1 | P-1 | P-1 | P-1 | P-9 |
| | Blocking agent | Type | B-3 | B-3 | B-3 | B-1 | B-1 | B-1 |
| | | | B-2 | B-2 | B-2 | B-2 | - | B-2 |
| | | Molar ratio of (B-1)/(B-2) or (B-3)/(B-2) (blending ratio) | 30/70 | 50/50 | 70/30 | 80/20 | - | 70/30 |
| | Molar ratio of (II)/(I) | | 30/70 | 50/50 | 70/30 | 73/27 | 85/15 | 70/30 |
| Physical property | Average NCO number | | 5.3 | 5.3 | 5.3 | 5.3 | 5.3 | 5.3 |
| | Solid content (mass%) | | 60.1 | 60.1 | 60.1 | 60.2 | 60.1 | 60.1 |
| | Weight-average molecular weight Mw | | $4.72\times10^3$ | $4.92\times10^3$ | $5.23\times10^3$ | $8.31\times10^3$ | $6.75\times10^3$ | $9.89\times10^3$ |
| Evaluation | Storage stability | | ○○ | ○○ | ◎ | ◎ | ◎ | - |
| | Low-temperature curability (Gel fraction: mass%) | | 86.7 | 86.1 | 85.5 | 87.3 | 86.4 | 84.2 |
| | König hardness (times) | | 52 | 49 | 41 | 65 | 64 | - |
| | Maximum stress (MPa) | | 24.2 | 20.5 | 16.5 | 25.9 | 25.2 | - |

As shown in Tables 1 to 6, in the blocked polyisocyanate compositions BL-a1 to BL-a26 having a molar ratio of constitutional unit (II)/constitutional unit (I) of 20/80 or more and 92/8 or less (Examples 1 to 26), the storage stability of the obtained resin composition was good, and the low-temperature curability, the König hardness and the maximum tensile stress of the obtained resin film were good.

Further, in the blocked polyisocyanate compositions BL-a1 to BL-a9 and BL-a11 to BL-a15 (Examples 1 to 9 and 11 to 15) having the different molar ratios of constitutional unit (II)/constitutional unit (I), the smaller the molar ratio of constitutional unit (II)/constitutional unit (I), namely, the larger the proportion of B-2, the better the König hardness of the obtained resin film. On the other hand, the larger the molar ratio of constitutional unit (II)/constitutional unit (I), namely, the larger the proportion of B-1, the better the storage stability of the obtained resin composition. Further, in the blocked polyisocyanate compositions BL-a1 to BL-a8 and BL-a11 to BL-a15 (Examples 1 to 8 and Examples 11 to 15) having a molar ratio of constitutional unit (II)/constitutional unit (I) of 90/10 or less, the maximum tensile stress of the obtained resin composition tended to be further improved.

Further, in the blocked polyisocyanate compositions BL-a10 to BL-a18 and BL-a20 (Examples 10 to 18 and 20) using a polyisocyanate containing a constitutional unit derived from HDI and IPDI, the König hardness and the maximum tensile stress of the obtained resin film tended to be particularly excellent.

In the blocked polyisocyanate composition BL-a19 (Example 19) using a polyisocyanate having a constitutional unit derived from a hydrophilic compound, the low-temperature curability, the König hardness, and the maximum tensile stress of the obtained resin film tended to be further improved compared to the blocked polyisocyanate composition BL-a6 (Example 6) using a polyisocyanate having no constitutional unit derived from a hydrophilic compound.

Among the blocked polyisocyanate compositions BL-a2, BL-a4 and BL-a6, and BL-a21 to BL-a23 (Examples 2, 4, 6 and 21 to 23) in which the combinations of the blocking agents used were different, the blocked polyisocyanate compositions BL-a2, BL-a4 and BL-a6 using a malonic acid ester having a tertiary alkyl group in combination with a malonic acid ester having a secondary alkyl group (Examples 2, 4 and 6) tended to show an improved low-temperature curability, König hardness, and maximum tensile stress of the obtained resin film.

On the other hand, in the blocked polyisocyanate composition BL-b 1 (Comparative Example 1) using the diisopropyl malonate (B-1) alone, although the storage stability of the obtained resin composition was good, the obtained

resin film was inferior in low-temperature curability and König hardness.

Further, in the blocked polyisocyanate composition BL-b2 (Comparative Example 2) using the di-tert-butyl malonate (B-2) alone, although the low-temperature curability and the König hardness of the obtained resin film were good, the storage stability of the obtained resin composition was poor.

In the blocked polyisocyanate composition BL-b3 (Comparative Example 3) in which the molar ratio of constitutional unit (II)/constitutional unit (I) was 5/95, although the low-temperature curability and the König hardness of the obtained resin film were good, the storage stability of the obtained resin composition was poor.

INDUSTRIAL APPLICABILITY

According to the blocked polyisocyanate composition of the present embodiment, a blocked polyisocyanate composition having good storage stability when made into a resin composition and having good curability at a low temperature of about 80°C when made into a resin film can be provided. The resin composition of the present embodiment contains said blocked polyisocyanate composition and has good storage stability. Further, since the resin composition of the present embodiment can be made into a resin film having excellent low-temperature curability, the resin composition can be suitably used for coating a material having low heat resistance.

## Claims

1. A blocked polyisocyanate composition which contains a blocked polyisocyanate derived from a polyisocyanate and one or more blocking agents, comprising

a constitutional unit represented by the following general formula (I) and a constitutional unit represented by the following general formula (II), wherein
a molar ratio of the constitutional unit represented by the following general formula (II) to the constitutional unit represented by the following general formula (I) is more than 5/95 and less than 95/5, the molar ratio being calculated by measuring the composition ratio of the structural unit (II) to the structural unit (I) by $^{1}H$-NMR and $^{13}C$-NMR after removing the solvent and other components from the blocked polyisocyanate composition at 50°C or less by an evaporator and drying under reduced pressure,

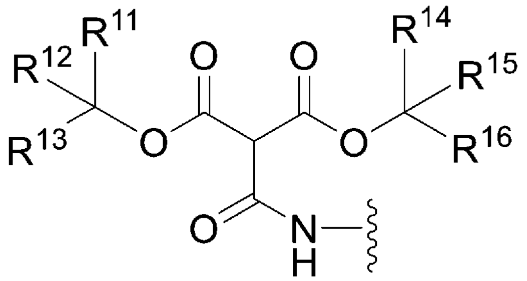

(I)

wherein in the general formula (I), $R^{11}$, $R^{12}$ and $R^{13}$ are each independently an alkyl group optionally substituted by one or more substituents selected from the group consisting of a hydroxyl group and an amino group, $R^{14}$, $R^{15}$ and $R^{16}$ are each independently a hydrogen atom or an alkyl group optionally substituted by one or more substituents selected from the group consisting of a hydroxyl group and an amino group, and the wavy line represents a bonding site,

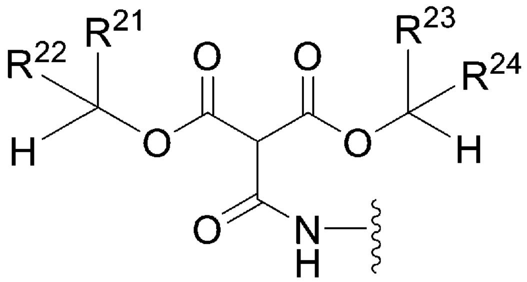

(II)

wherein in the general formula (II), $R^{21}$, $R^{22}$, $R^{23}$ and $R^{24}$ are each independently a hydrogen atom or an alkyl

group optionally substituted by one or more substituents selected from the group consisting of a hydroxyl group and an amino group, the wavy line represents a bonding site, and
the polyisocyanate is a reaction product in which a plurality of monomer compounds having one or more isocyanate groups represented by -NCO are bonded,
wherein the blocking agent for producing the blocked polyisocyanate contains a malonic acid ester having secondary alkyl group or a malonic acid ester having a primary alkyl group, and contains a malonic acid ester having a tertiary alkyl group,
and wherein the content of the malonic acid ester having a secondary alkyl group and the malonic acid ester having a tertiary alkyl group is 50 mol% or more with respect to the total molar amount of all blocking agents used in the production of the blocked polyisocyanate.

**2.** The blocked polyisocyanate composition according to claim 1, wherein

the constitutional unit represented by the general formula (I) is a constitutional unit derived from the malonic acid ester having a tertiary alkyl group, and
the constitutional unit represented by the general formula (II) is a constitutional unit derived from the malonic ester having a secondary alkyl group or a constitutional unit derived from the malonic ester having a primary alkyl group.

**3.** The blocked polyisocyanate composition according to claim 2, wherein
the blocked polyisocyanate is derived from a polyisocyanate, a malonic acid ester having one or more tertiary alkyl groups, and a malonic acid ester having one or more secondary alkyl groups.

**4.** The blocked polyisocyanate composition according to claim 3, wherein

the malonic acid ester having a tertiary alkyl group includes a di-tert-butyl malonate, and
the malonic acid ester having a secondary alkyl group includes a diisopropyl malonate.

**5.** The blocked polyisocyanate composition according to any one of claims 1 to 4, wherein

the polyisocyanate has an average number of isocyanate functional groups of 2 or more, the average number of isocyanate functional groups being calculated by the following formula:

$$\text{average number of isocyanate functional groups} = (\text{Mn} \times \text{NCO content} \times 0.01)/42$$

Mn: number-average molecular weight of polyisocyanate before blocking with a blocking agent
NCO content: isocyanate group content of the polyisocyanate before blocking with a blocking agent.

**6.** The blocked polyisocyanate composition according to any one of claims 1 to 5, wherein
the polyisocyanate is a polyisocyanate derived from at least one diisocyanate selected from the group consisting of an aliphatic diisocyanate and an alicyclic diisocyanate.

**7.** The blocked polyisocyanate composition according to any one of claims 1 to 6, wherein
the blocked polyisocyanate composition has a weight-average molecular weight Mw of $2.0 \times 10^3$ or more.

**8.** The blocked polyisocyanate composition according to any one of claims 1 to 7, wherein
the blocked polyisocyanate has an isocyanurate group.

**9.** A resin composition comprising the blocked polyisocyanate composition defined in any one of claims 1 to 8 and a polyhydric hydroxy compound selected from the group consisting of an aliphatic hydrocarbon polyol, a polyether polyol, a polyester polyol, an epoxy resin, a fluorine-containing polyol and an acrylic polyol.

**10.** A resin film obtained by curing the resin composition defined in claim 9.

**11.** The resin film according to claim 10, wherein

a gel fraction of the resin film is 82% by mass or more,

wherein the gel fraction is a percentage value (mass%) obtained by dividing a mass of undissolved part after immersing a test resin film in acetone at 23°C for 24 hours by a mass before immersion,
the test resin film has a thickness of 40 μm, and
the test resin film is obtained by heating and curing the resin composition at 80°C for 30 min, followed by storing at 23°C for one week.

**12.** The resin film according to claim 10 or 11, wherein

a König hardness of the resin film is 38 times or more,
wherein the König hardness is measured at 23°C using a test resin film obtained by heating and curing the resin composition on a glass at 80°C for 30 min, followed by storing at 23°C for one week, and
the test resin film has a thickness of 40 μm.

**13.** The resin film according to any one of claims 10 to 12, wherein

a maximum tensile stress of the resin film is 5 MPa or more,
wherein the maximum tensile stress is measured by a tensile test carried out at 23°C and a speed of 20 mm/min when measuring a resin film having a thickness of 40 μm, a width of 10 mm and a length of 40 mm set so that a distance between chucks is 20mm, the test resin film being obtained by heating and curing the resin composition at 80°C for 30 min.

**14.** A laminate comprising two or more resin films having different compositions defined in any one of claims 10 to 13, wherein
a thickness of each layer of the laminate is 1 μm or more and 50 μm or less.

**Patentansprüche**

**1.** Zusammensetzung von blockiertem Polyisocyanat, enthaltend ein von einem Polyisocyanat abgeleitetes blockiertes Polyisocyanat und ein oder mehrere Blockierungsmittel, umfassend:

eine durch die folgende allgemeine Formel (I) dargestellte konstitutionelle Einheit und eine durch die folgende allgemeine Formel (II) dargestellte konstitutionelle Einheit, wobei
das Molverhältnis der durch die folgende allgemeine Formel (II) dargestellten konstitutionellen Einheit zu der durch die folgende allgemeine Formel (I) dargestellten konstitutionellen Einheit mehr als 5/95 und weniger als 95/5 beträgt, wobei das Molverhältnis durch Messen des Zusammensetzungsverhältnisses der Struktureinheit (II) zu der Struktureinheit (I) mittels $^{1}$H-NMR und $^{13}$C-NMR nach Entfernen des Lösungsmittels und anderer Komponenten aus der Zusammensetzung von blockierten Polyisocyanat bei 50°C oder weniger mittels eines Verdampfers und Trocknen unter reduziertem Druck berechnet wird,

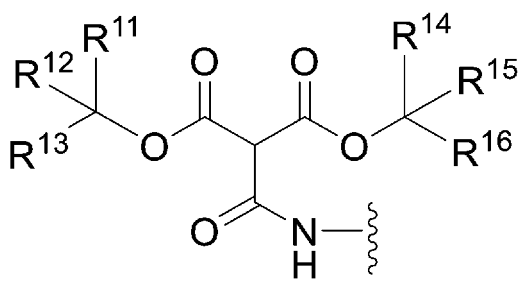

(I)

wobei in der allgemeinen Formel (I) $R^{11}$, $R^{12}$ und $R^{13}$ jeweils unabhängig eine Alkylgruppe sind, die optional durch einen oder mehrere Substituenten, ausgewählt aus der Gruppe bestehend aus einer Hydroxylgruppe und einer Aminogruppe, substituiert ist, $R^{14}$, $R^{15}$ und $R^{16}$ jeweils unabhängig ein Wasserstoffatom oder eine Alkylgruppe, die optional durch einen oder mehrere Substituenten, ausgewählt aus der Gruppe bestehend aus einer Hydroxylgruppe und einer Aminogruppe, substituiert ist, sind, und die Wellenlinie eine Bindungsstelle darstellt,

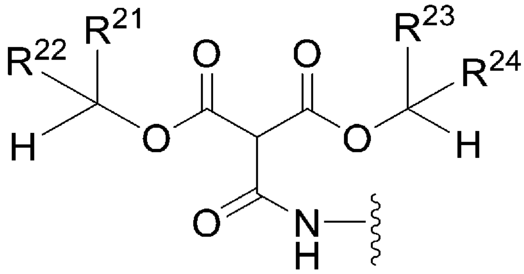

(I I)

wobei in der allgemeinen Formel (II) $R^{21}$, $R^{22}$, $R^{23}$ und $R^{24}$ jeweils unabhängig ein Wasserstoffatom oder eine Alkylgruppe, die optional durch einen oder mehrere Substituenten, ausgewählt aus der Gruppe bestehend aus einer Hydroxylgruppe und einer Aminogruppe, substituiert ist, sind, und die Wellenlinie eine Bindungsstelle darstellt, und

das Polyisocyanat ein Reaktionsprodukt ist, in dem eine Mehrzahl von Monomerverbindungen, die eine oder mehrere durch -NCO dargestellte Isocyanatgruppen aufweisen, verbunden sind,

wobei das Blockierungsmittel zur Herstellung des blockierten Polyisocyanats einen Malonsäureester mit einer sekundären Alkylgruppe oder einen Malonsäureester mit einer primären Alkylgruppe enthält, und einen Malonsäureester mit einer tertiären Alkylgruppe enthält,

und wobei der Gehalt des Malonsäureesters mit einer sekundären Alkylgruppe und des Malonsäureesters mit einer tertiären Alkylgruppe 50 Mol-% oder mehr beträgt, bezogen auf die gesamte molare Menge aller bei der Herstellung des blockierten Polyisocyanats verwendeten Blockierungsmittel.

**2.** Zusammensetzung von blockiertem Polyisocyanat nach Anspruch 1, wobei

die durch die allgemeine Formel (I) dargestellte konstitutionelle Einheit eine von dem Malonsäureester mit einer tertiären Alkylgruppe abgeleitete konstitutionelle Einheit ist, und

die durch die allgemeine Formel (II) dargestellte konstitutionelle Einheit eine von dem Malonsäureester mit einer sekundären Alkylgruppe abgeleitete konstitutionelle Einheit oder eine von dem Malonsäureester mit einer primären Alkylgruppe abgeleitete konstitutionelle Einheit ist.

**3.** Zusammensetzung von blockiertem Polyisocyanat nach Anspruch 2, wobei
das blockierte Polyisocyanat von einem Polyisocyanat, einem Malonsäureester mit einer oder mehreren tertiären Alkylgruppen und einem Malonsäureester mit einer oder mehreren sekundären Alkylgruppen abgeleitet ist.

**4.** Zusammensetzung von blockiertem Polyisocyanat nach Anspruch 3, wobei

der Malonsäureester mit einer tertiären Alkylgruppe ein Di-tert.-butylmalonat beinhaltet, und
der Malonsäureester mit einer sekundären Alkylgruppe ein Diisopropylmalonat beinhaltet.

**5.** Zusammensetzung von blockiertem Polyisocyanat nach einem der Ansprüche 1 bis 4, wobei

das Polyisocyanat eine mittlere Anzahl von funktionellen Isocyanatgruppen von 2 oder mehr aufweist, wobei die mittlere Anzahl von funktionellen Isocyanatgruppen nach der folgenden Formel berechnet wird:

mittlere Anzahl von funktionellen Isocyanatgruppen = (Mn $\times$ NCO-Gehalt $\times$ 0,01)/42

Mn: zahlenmittleres Molekulargewicht des Polyisocyanats vor dem Blockieren mit einem Blockierungsmittel
NCO-Gehalt: Isocyanatgruppengehalt des Polyisocyanats vor dem Blockieren mit einem Blockierungsmittel.

**6.** Zusammensetzung von blockiertem Polyisocyanat nach einem der Ansprüche 1 bis 5, wobei
das Polyisocyanat ein Polyisocyanat ist, das von mindestens einem Diisocyanat, ausgewählt aus der Gruppe bestehend aus einem aliphatischen Diisocyanat und einem alicyclischen Diisocyanat, abgeleitet ist.

**7.** Zusammensetzung von blockiertem Polyisocyanat nach einem der Ansprüche 1 bis 6, wobei
die Zusammensetzung von blockiertem Polyisocyanat ein gewichtsmittleres Molekulargewicht Mw von $2{,}0 \times 10^3$ oder mehr aufweist.

**8.** Zusammensetzung von blockiertem Polyisocyanat nach einem der Ansprüche 1 bis 7, wobei das blockierte Polyisocyanat eine Isocyanuratgruppe aufweist.

**9.** Harzzusammensetzung, umfassend die in einem der Ansprüche 1 bis 8 definierte Zusammensetzung von blockiertem Polyisocyanat und eine mehrwertige Hydroxylverbindung, ausgewählt aus der Gruppe bestehend aus einem aliphatischen Kohlenwasserstoffpolyol, einem Polyetherpolyol, einem Polyesterpolyol, einem Epoxidharz, einem fluorhaltigen Polyol und einem Acrylpolyol.

**10.** Harzfilm/-folie, erhalten durch Härten der in Anspruch 9 definierten Harzzusammensetzung.

**11.** Harzfilm/-folie nach Anspruch 10, wobei

der Gelanteil des Harzfilms/der Harzfolie 82 Massen-% oder mehr beträgt,
wobei der Gelanteil ein prozentualer Wert (Massen-%) ist, der erhalten wird, indem die Masse des ungelösten Teils nach Eintauchen eines Testharzfilms/einer Testharzfolie in Aceton bei 23°C für 24 Stunden durch die Masse vor dem Eintauchen dividiert wird,
wobei der Testharzfilm/die Testharzfolie eine Dicke von 40 μm hat und
der Testharzfilm/die Testharzfolie durch Erhitzen und Härten der Harzzusammensetzung bei 80° C für 30 Minuten und anschließende Lagerung bei 23°C für eine Woche erhalten wird.

**12.** Harzfilm/-folie nach Anspruch 10 oder 11, wobei

die König-Härte des Harzfilms von 38 oder mehr ist,
wobei die König-Härte bei 23°C unter Verwendung eines Testharzfilms/einer Testharzfolie gemessen wird, der/die durch Erhitzen und Aushärten der Harzzusammensetzung auf einem Glas bei 80° C für 30 min, gefolgt von einer Lagerung bei 23°C für eine Woche, erhalten wird, und
wobei der Testharzfilm/die Testharzfolie eine Dicke von 40 μm hat.

**13.** Harzfilm/-folie nach einem der Ansprüche 10 bis 12, wobei

die maximale Zugspannung des Harzfilms/der Harzfolie 5 MPa oder mehr beträgt,
wobei die maximale Zugspannung durch einen Zugtest gemessen wird, der bei 23°C und einer Geschwindigkeit von 20 mm/min durchgeführt wird, wenn ein Harzfilm/eine Harzfolie mit einer Dicke von 40 μm, einer Breite von 10 mm und einer Länge von 40 mm gemessen wird, wobei der Abstand zwischen Spannvorrichtungen 20 mm beträgt, und wobei der Testharzfilm/die Testharzfolie durch Erhitzen und Härten der Harzzusammensetzung bei 80° C für 30 min erhalten wird.

**14.** Laminat, umfassend zwei oder mehr Harzfilme/Harzfolien mit unterschiedlichen Zusammensetzungen gemäß einem der Ansprüche 10 bis 13, wobei
die Dicke jeder Schicht des Laminats 1 μm oder mehr und 50 μm oder weniger beträgt.

## Revendications

**1.** Composition de polyisocyanate bloqué qui contient un polyisocyanate bloqué dérivé d'un polyisocyanate et un ou plusieurs agents de blocage, comprenant

un motif constitutif représenté par la formule générale (I) suivante et un motif constitutif représenté par la formule générale (II) suivante, dans laquelle
un rapport molaire du motif constitutif représenté par la formule générale (II) suivante au motif constitutif représenté par la formule générale (I) suivante est supérieur à 5/95 et inférieur à 95/5, le rapport molaire étant calculé en mesurant le rapport compositionnel du motif structural (II) au motif structural (I) par $^{1}$H-RMN et $^{13}$C-RMN après élimination du solvant et d'autres composants de la composition de polyisocyanate bloqué à 50 °C ou moins par un évaporateur et séchage sous pression réduite,

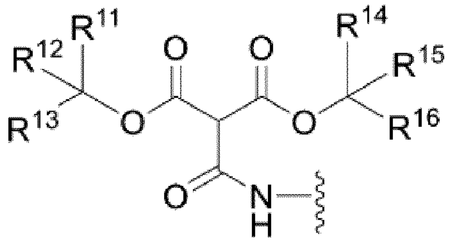

(I)

dans laquelle dans la formule générale (I), $R^{11}$, $R^{12}$ et $R^{13}$ sont chacun indépendamment un groupe alkyle facultativement substitué par un ou plusieurs substituants choisis dans le groupe constitué d'un groupe hydroxyle et d'un groupe amino, $R^{14}$, $R^{15}$ et $R^{16}$ sont chacun indépendamment un atome d'hydrogène ou un groupe alkyle facultativement substitué par un ou plusieurs substituants choisis dans le groupe constitué d'un groupe hydroxyle et d'un groupe amino, et la ligne ondulée représente un site de liaison,

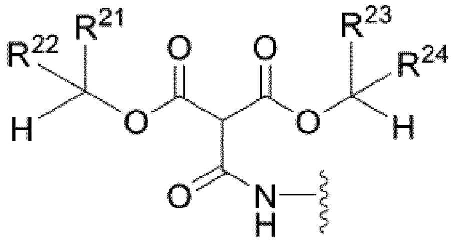

(II)

dans laquelle dans la formule générale (II), $R^{21}$, $R^{22}$, $R^{23}$ et $R^{24}$ sont chacun indépendamment un atome d'hydrogène ou un groupe alkyle facultativement substitué par un ou plusieurs substituants choisis dans le groupe constitué d'un groupe hydroxyle et d'un groupe amino, la ligne ondulée représente un site de liaison, et le polyisocyanate est un produit réactionnel dans lequel une pluralité de composés monomères ayant un ou plusieurs groupes isocyanate représentés par -NCO sont liés,
dans laquelle l'agent de blocage pour produire le polyisocyanate bloqué contient un ester d'acide malonique ayant un groupe alkyle secondaire ou un ester d'acide malonique ayant un groupe alkyle primaire, et contient un ester d'acide malonique ayant un groupe alkyle tertiaire,
et dans laquelle la teneur de l'ester d'acide malonique ayant un groupe alkyle secondaire et l'ester d'acide malonique ayant un groupe alkyle tertiaire est de 50 % en moles ou plus par rapport à la quantité molaire totale de tous les agents de blocage utilisés dans la production du polyisocyanate bloqué.

**2.** Composition de polyisocyanate bloqué selon la revendication 1, dans laquelle

le motif constitutif représenté par la formule générale (I) est un motif constitutif dérivé de l'ester d'acide malonique ayant un groupe alkyle tertiaire, et
le motif constitutif représenté par la formule générale (II) est un motif constitutif dérivé de l'ester malonique ayant un groupe alkyle secondaire ou un motif constitutif dérivé de l'ester malonique ayant un groupe alkyle primaire.

**3.** Composition de polyisocyanate bloqué selon la revendication 2, dans laquelle
le polyisocyanate bloqué est dérivé d'un polyisocyanate, d'un ester d'acide malonique ayant un ou plusieurs groupes alkyles tertiaires, et d'un ester d'acide malonique ayant un ou plusieurs groupes alkyles secondaires.

**4.** Composition de polyisocyanate bloqué selon la revendication 3, dans laquelle

l'ester d'acide malonique ayant un groupe alkyle tertiaire comporte un malonate de di-tert-butyle, et
l'ester d'acide malonique ayant un groupe alkyle secondaire comporte un malonate de diisopropyle.

**5.** Composition de polyisocyanate bloqué selon l'une quelconque des revendications 1 à 4, dans laquelle
le polyisocyanate a un nombre moyen de groupes fonctionnels isocyanate de 2 ou plus, le nombre moyen de groupes fonctionnels isocyanate étant calculé par la formule suivante :

$$\text{nombre moyen de groupes fonctionnels isocyanate} = (\text{Mn} \times \text{teneur en NCO} \times 0{,}01)/42$$

Mn : poids moléculaire moyen en nombre de polyisocyanate avant blocage avec un agent de blocage
Teneur en NCO : teneur en groupes isocyanate du polyisocyanate avant blocage avec un agent de blocage.

**6.** Composition de polyisocyanate bloqué selon l'une quelconque des revendications 1 à 5, dans laquelle le polyisocyanate est un polyisocyanate dérivé d'au moins un diisocyanate choisi dans le groupe constitué d'un diisocyanate aliphatique et d'un diisocyanate alicyclique.

**7.** Composition de polyisocyanate bloqué selon l'une quelconque des revendications 1 à 6, dans laquelle la composition de polyisocyanate bloqué a un poids moléculaire moyen en poids Mw de $2,0 \times 10^3$ ou plus.

**8.** Composition de polyisocyanate bloqué selon l'une quelconque des revendications 1 à 7, dans laquelle le polyisocyanate bloqué a un groupe isocyanurate.

**9.** Composition de résine comprenant la composition de polyisocyanate bloqué selon l'une quelconque des revendications 1 à 8 et un composé hydroxy polyhydrique choisi dans le groupe constitué d'un polyol hydrocarboné aliphatique, d'un polyéther polyol, d'un polyester polyol, d'une résine époxy, d'un polyol contenant du fluor et d'un polyol acrylique.

**10.** Film de résine obtenu par durcissement de la composition de résine selon la revendication 9.

**11.** Film de résine selon la revendication 10, dans lequel

une fraction de gel du film de résine est de 82 % en masse ou plus,
dans lequel la fraction de gel est une valeur en pourcentage (% en masse) obtenue en divisant une masse de partie non dissoute après immersion d'un film de résine d'essai dans de l'acétone à 23 °C pendant 24 heures par une masse avant immersion,
le film de résine d'essai a une épaisseur de 40 μm, et
le film de résine d'essai est obtenu par chauffage et durcissement de la composition de résine à 80 °C pendant 30 min, suivi d'un stockage à 23 °C pendant une semaine.

**12.** Film de résine selon la revendication 10 ou 11, dans lequel une dureté de König du film de résine est de 38 fois ou plus,

dans lequel la dureté de König est mesurée à 23 °C en utilisant un film de résine d'essai obtenu par chauffage et durcissement de la composition de résine sur un verre à 80 °C pendant 30 min, suivi d'un stockage à 23 °C pendant une semaine, et
le film de résine d'essai a une épaisseur de 40 μm.

**13.** Film de résine selon l'une quelconque des revendications 10 à 12, dans lequel

une contrainte de traction maximale du film de résine est de 5 MPa ou plus,
dans lequel la contrainte de traction maximale est mesurée par un essai de traction réalisé à 23 °C et à une vitesse de 20 mm/min lorsque l'on mesure un film de résine ayant une épaisseur de 40 μm, une largeur de 10 mm et une longueur de 40 mm définie de sorte qu'une distance entre les mandrins est de 20 mm, le film de résine d'essai étant obtenu par chauffage et durcissement de la composition de résine à 80 °C pendant 30 min.

**14.** Stratifié comprenant deux films de résine ou plus ayant différentes compositions selon l'une quelconque des revendications 10 à 13, dans lequel
une épaisseur de chaque couche du stratifié est de 1 μm ou plus et de 50 μm ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002322238 A
- JP 2006335954 A
- EP 0744423 A1
- US 5466860 A
- US 2015037591 A1
- US 2019100615 A1
- JP 57034107 A
- JP S61275311 A
- JP H1261409 A
- JP H3006273 A
- JP 508 T